# EUROPÄISCHE PATENTSCHRIFT

(11) **EP 3 421 527 B1**
(45) Veröffentlichungstag und Bekanntmachung des Hinweises auf die Patenterteilung: **15.11.2023**
(21) Anmeldenummer: 17178456.4
(22) Anmeldetag: 28.06.2017
(51) Int. Cl.: C08J 9/32, C08K 3/34

(54) **ZUSAMMENSETZUNG MIT LEICHTFÜLLSTOFF**
COMPOSITION CONTAINING A LIGHTWEIGHT FILLER
COMPOSITION COMPRENANT UNE CHARGE LEGERE

(43) Veröffentlichungstag der Anmeldung: 02.01.2019
(73) Patentinhaber: Henkel AG & Co. KGaA, 40589 Düsseldorf (DE)
(72) Erfinder: SAUER, Ralf, 68789 St. Leon-Rot (DE); KLOTZ, Michael, 68353 Edingen-Neckarhausen (DE); ZAHN, Thomas, 69245 Bammental (DE); BORN, Peter, 69207 Sandhausen (DE)

(56) Entgegenhaltungen:
- WO-A1-2007/004184
- WO-A1-2013/053635
- DE-A1- 2 242 548
- DE-A1- 2 254 305
- US-A1- 2007 173 553
- DATABASE WPI Week 201546 Thomson Scientific, London, GB; AN 2015-370824 XP002773021, -& CN 104 513 453 A (SUZHOU TUNABLE NEW MATERIALS TECHNOLOGY) 15. April 2015 (2015-04-15)

## Beschreibung

Bindemittel, mindestens einen Härter und/oder Beschleuniger, mindestens ein thermisch aktivierbares Treibmittel und mindestens einen Leichtfüllstoff, wobei als Leichtfüllstoff mindestens ein geblähtes Partikel mindestens eines glasreichen vulkanischen Gesteins mit einer geschlossenen Außenschale enthalten ist, ein Verfahren zum Versteifen und/oder Verstärken von rohrförmigen Strukturen mit einer entsprechenden Zusammensetzung sowie entsprechend hergestellte Bauteile und die entsprechende Verwendung der Zusammensetzung.

In der heutigen Industrie, gerade in der Automobilindustrie, steigt stetig das Interesse an einer besonders leichten Bauweise, die aber dennoch nicht an Stabilität verlieren soll. Dies wird insbesondere durch Leichtbauteile bewerkstelligt. So werden Leichtbauteile für eine konstant maßhaltige Serienfertigung mit hoher Steifigkeit und Strukturfestigkeit für viele Anwendungsgebiete benötigt. Insbesondere im Fahrzeugbau besteht wegen der dort gewünschten Gewichtsersparnis ein hoher Bedarf an Leichtbauteilen aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigem Gewicht des Bauteils benutzt Hohlteile, die aus verhältnismäßig dünnem Blech oder Kunststoffplatten gefertigt sind. Dünnwandige Bleche neigen jedoch leicht zu Deformation. Daher ist es bereits seit einiger Zeit bekannt, bei Hohlkörperstrukturen diesen Hohlraum vollständig oder auch nur teilweise, beispielsweise in mechanisch besonders beanspruchten Teilbereichen, mit einem Strukturschaum auszuschäumen. Dadurch können einerseits Deformationen oder Verformungen minimiert oder sogar vollständig verhindert werden und andererseits Festigkeit und Steifigkeit der Hohlkörperstrukturen erhöht werden.

Üblicherweise sind derartige geschäumte Verstärkungs- und Versteifungsmittel entweder Metallschäume oder sie werden aus thermisch härt- und expandierbaren Zubereitungen, beispielsweise auf Basis von Epoxidharzen, hergestellt. Entsprechende geschäumte Verstärkungsmittel weisen jedoch häufig noch eine zu geringe Steifigkeit auf, da aufgrund der Schäumung die Härte der resultierenden Struktur herabgesetzt wird.

Um eine höhere Festigkeit zu erreichen, wobei aber weiterhin ein geringes Gewicht des Endproduktes erreicht werden soll, wurden entsprechende Zusammensetzungen mit Leichtzuschlagsstoffen versetzt, wie zum Beispiel mit Glas-Hohlkugeln und Polymerballons. Diese Leichtfüllstoffe haben jedoch häufig Nachteile.

Viele der Leichtfüllstoffe sind relativ teuer, wie Glas-Hohlkugeln, weshalb diese die Kosten für die expandierbaren Zusammensetzungen unnötig in die Höhe treiben. Auch sind nicht alle Leichtfüllstoff uneingeschränkt mit den anderen Bestandteilen der Zusammensetzung kompatibel. So kann es sein, dass einige Leichtfüllstoffe, wie offenporiger Bims oder Zeolith, bei flüssigen Zusammensetzungen oder bei Zusammensetzungen mit flüssigen Komponenten teilweise die Zusammensetzung aufnehmen bzw. bei der Lagerung mit der Zeit Wasser aufnehmen. Diese Aufnahme von Teilen der Zusammensetzung bzw. von Wasser kann einerseits dazu führen, dass der Effekt des Leichtzuschlagstoffes hinsichtlich der Gewichtsreduktion verringert wird, aber kann auch dazu führen, dass die mechanischen und optischen Eigenschaften des Endproduktes sich stark verschlechtern.

Des Weiteren müssen sich die Zusammensetzungen üblicherweise für die Auftragung pumpen lassen. Jedoch werden bei diesem Pumpprozess sehr hohe Drücke erreicht, bis zu 360 bar. Gerade dieser Pumpprozess stellt eine besondere Herausforderung für Zusammensetzungen mit Leichtfüllstoff da. Gerade die hohen Drücke führen häufig dazu, dass der Leichtfüllstoff während des Pumpprozess beschädig oder sogar zerstört wird, wie zum Beispiel im Falle von Polymerballons.

DE 22 42 548 A1 offenbart ein feuerfestes Raum- oder Flächengebilde, insbesondere ein Bauelement, das im Wesentlichen aus einem expandierbaren Mineral und einem Aminoplast-Bindemittel zusammengesetzt ist. DE 22 54 305 A1 offenbart Schaumstoffe und ein Verfahren zur Herstellung solcher Schaumstoffe, wobei die Phenolharz-Schaumstoffe kleine geschlossene Zellen aufweisen sollen, sodass sie eine verbesserte Beständigkeit gegenüber Wärme haben und sich als Isolations- und Baumaterialien verwenden lassen. US 2007/173553 offenbart Polymere auf Wasserbasis zur Herstellung von feuerbeständigen Schäumen. CN 104513453 A gehört zum Gebiet der duroplastischen Phenolharz-Verbundmaterialien und offenbart ein Herstellungsverfahren für ein duroplastisches Phenolharz-Verbundmaterial, insbesondere Schaummaterial. WO 2013/053635 offenbart die Herstellung eines geblähten Granulats aus sandkornförmigem, mineralischem Material mit einem Treibmittel. In der WO 2007/004184 wird ein festes, thermisch ausdehnbares Material bereitgestellt, welches ein festes Epoxidharz umfasst, das im Wesentlichen frei von flüssigem Epoxidharz und halbfestem Epoxidharz ist.

Dementsprechend war es die Aufgabe der vorliegenden Erfindung, Zusammensetzungen zur Herstellung von Strukturschäumen für die lokale Verstärkung von Bauteilen zur Verfügung zu stellen, wobei die Strukturen geringes Gewicht bei gleichzeitig hoher Festigkeit aufweisen sollen. Diese Zusammensetzungen sollen sich zwecks der besseren Verarbeitungsfähigkeit pumpen lassen, wobei die Zusammensetzungen vorzugsweise auch Pumpdrücke von bis zu 360 bar unbeschadet überstehen sollen.

Die Aufgabe wird in überraschender Weise durch die anspruchsgemäße Zusammensetzung gelöst. In einem ersten Aspekt betrifft die vorliegende Erfindung daher eine Zusammensetzung umfassend
(a) mindestens ein reaktives Bindemittel;
(b) mindestens einen Härter und/oder Beschleuniger,
(c) mindestens ein thermisch aktivierbares Treibmittel und
(d) mindestens einen Leichtfüllstoff, wobei als Leichtfüllstoff mindestens ein geblähtes Partikel mindestens eines glasreichen vulkanischen Gesteins mit einer geschlossenen Außenschale enthalten ist
wobei die Zusammensetzung bei Temperaturen unterhalb von 70 °C pumpbar ist.

Insbesondere wird die Aufgabe in überraschender Weise durch ein Verfahren zum Versteifen und/oder Verstärken von rohrförmigen Strukturen gelöst, wobei die genannte Zusammensetzung bei einer Temperatur unterhalb von 70°C auf die Oberfläche der zu verstärkenden Struktur, insbesondere mit einem Pumpendruck von größer 3 bar, aufgebracht wird und diese Zusammensetzung zu einem späteren Zeitpunkt bei Temperaturen oberhalb von 130°C ausgehärtet wird.

Die erfindungsgemäßen Zusammensetzungen sind sowohl leicht zu handhaben und können auch ohne einen Schaden am Leichtfüllstoff bei Drücken von bis zu 360 bar gepumpt werden. Die enthaltenen geblähten Partikel aus mindestens einem glasreichen vulkanischen Gestein nehmen aufgrund ihrer geschlossenen Außenschale keine Bestandteile der Zusammensetzung und auch kein Wasser auf, so dass der gewichtsreduzierende Effekt erhalten bleibt und die anderen mechanischen Eigenschaften nicht negativ beeinflusst werden. Die geblähten Partikel sind aufgrund ihres Materials und der geschlossenen Außenschale druckstabil.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Klebstoff-Zusammensetzungen bezieht sich diese Angabe nicht auf die absolute Menge an Molekülen sondern auf die Art des Bestandteils. "Mindestens ein Epoxidharz" bedeutet daher beispielsweise ein oder mehrere verschiedene Epoxidharze, d.h. eine oder mehrere verschiedene Arten von Epoxidharzen. Zusammen mit Mengenangaben beziehen sich die Mengenangaben auf die Gesamtmenge der entsprechend bezeichneten Art von Bestandteil, wie bereits oben definiert.

Die Gew.-%-Angaben, wie hierin verwendet, beziehen sich, soweit nichts anders angegeben wurde, jeweils auf die gesamte Zusammensetzung.

Sofern hierin auf Molekulargewichte von polymeren Verbindungen Bezug genommen wird, beziehen sich die Angaben auf das zahlenmittlere Molekulargewicht Mₙ, sofern nicht anders angegeben. Das Molekulargewicht, zahlenmittleres als auch gewichtsmittleres, kann mittels GPC gegen einen Polystyrolstandard bestimmt werden.

Die erfindungsgemäßen Zusammensetzungen enthalten mindestens ein reaktives Bindemittel und mindestens einen Härter und/oder Beschleuniger, insbesondere einen thermisch aktivierbaren Härter.

Vorzugsweise liegt der Härter und/oder Beschleuniger allgemein in einer Menge von insgesamt mindestens 0,25 Gew.-% und insbesondere von mindestens 1,5 Gew.-% bezogen auf die Gesamtzusammensetzung vor. Mehr als insgesamt 15 Gew.-% bezogen auf die Gesamtmasse der Zusammensetzung sind jedoch in der Regel nicht erforderlich. Allerdings kann der Anteil des Härters und/oder Beschleunigers stark variieren in Abhängigkeit vom verwendeten System.

Vorzugsweise wird der Härter so ausgewählt, dass der Härter ein thermisch aktivierbarer Härter ist, so dass die Vernetzungstemperatur T90 des Systems bevorzugt oberhalb 70 °C, insbesondere oberhalb von 100 °C liegt. Die Vernetzungstemperatur T90 definiert sich als die Temperatur, bei der eine 90%ige Vernetzung des Materials innerhalb von 12 Minuten erreicht wird. Die Vernetzungstemperatur T90 und der Vernetzungsgrad können mittels einer Rheometermessung bestimmt werden, wie mit einem Monsanto-Rheometer 100 S (Prinzip oszillierende Scheibe bei einem Auslenkwinkel von 3°, ca. 15 cm3 Kammervolumen) nach DIN 53529.

Der Anteil des reaktiven Bindemittels an der Gesamtzusammensetzung kann allgemein im Bereich von 2 bis 65 Gew.-% liegen. Allerdings kann der Anteil des Bindemittels stark variieren in Abhängigkeit vom verwendeten System. Bevorzugte reaktive Bindemittel der Zusammensetzungen sind ausgewählt aus der Gruppe von Epoxiden, Kautschuken, peroxidisch vernetzbaren Polymeren oder Triglyceridfraktionen mit ungesättigten Fettsäuren.

Ein bevorzugter Gegenstand enthält daher als reaktives Bindemittel Epoxide. Als Epoxidharze eignen sich eine Vielzahl von Polyepoxiden, die mindestens 2 1,2- Epoxygruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schliessen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Als thermisch aktivierbare oder latente Härter für das Epoxidharz-Bindemittelsystem aus den genannten Komponenten können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter stöchiometrisch mit in die Härtungsreaktion einbezogen sein. Sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für einkomponentige, hitzehärtende Formkörper ist das Auswahlkriterium die niedrige Löslichkeit dieser Stoffe bei Raumtemperatur in dem Harzsystem, so dass hier feste, feinvermahlene Härter den Vorzug haben. Insbesondere ist Dicyandiamid geeignet. Damit ist eine gute Lagerstabilität der hitzehärtbaren Formkörper gewährleistet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Diese haben jedoch vielfach eine zu hohe Löslichkeit in dem Klebstoffsystem, so dass hier keine brauchbare Lagerstabilität des einkomponentigen Systems erreicht wird. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C1-12-Alkylimidazole oder N-Arylimidazole. Besonders bevorzugt ist der Einsatz einer Kombination aus Härter und Beschleuniger in Form von sog. beschleunigten Dicyandiamiden in feinvermahlener Form. Dadurch erübrigt sich der separate Zusatz von katalytisch wirksamen Beschleunigern zu dem Epoxid-Härtungssystem.

Zur Verbesserung der Stoßfestigkeit können ferner ein oder mehrere so genannte "impact modifier" anwesend sein, wie sie im Stand der Technik für diesen Zweck bekannt sind. Beispiele sind thermoplastische Harze, die vorzugsweise gegenüber Epoxigruppen reaktive Gruppen tragen. Weiterhin sind natürliche oder synthetische Kautschuke für diesen Zweck geeignet. Konkrete Beispiele hierfür können dem Dokument WO 2007/004184 in den Abschnitten [27] und [28] (Seiten 6 und 7) entnommen werden.

Ein weiterer bevorzugter Gegenstand enthält die Zusammensetzung mindestens ein reaktives Bindemittel auf der Basis von natürlichen und / oder synthetischen Kautschuken. Neben den reaktiven Bindemitteln auf Basis von natürlichen und/oder synthetischen Kautschuken (d.h. olefinische Doppelbindung enthaltenden Elastomeren) enthält die Zusammensetzung vorzugsweise mindestens ein Vulkanisationsmittel. In einer bevorzugten Ausführungsform auf Basis von natürlichen und/oder synthetischen Kautschuken enthält die Zusammensetzung als Bindemittel und Härter:
- 5-50 Gew.-% mindestens eines Polyens, insbesondere eines flüssigen Polyens mit vorzugsweise einem Molekulargewicht Mw unter 20000 und
- ein Vulkanisationssystem bestehend aus Schwefel und einem oder mehreren organischen Beschleuniger(n) und /oder Metalloxid(en).

Flüssigkautschuke oder Elastomere können dabei aus der folgenden Gruppe der Homo- und/oder Copolymeren ausgewählt werden:
Polybutadiene, insbesondere die 1,4- und 1,2-Polybutadiene, Polybutene, Polyisobutylene, 1,4- und 3,4-Polyisoprene, Styrol-Butadien-Copolymere, Butadien-Acrylnitril-Copolymere, wobei diese Polymere endständige und/oder (statistisch verteilte) seitenständige funktionelle Gruppen haben können. Beispiele für derartige funktionelle Gruppen sind Hydroxy-, Amino-, Carboxyl-, Carbonsäureanhydrid- oder Epoxygruppen. Das gewichtsmittlere Molekulargewicht Mw dieser Flüssigkautschuke ist typischerweise unterhalb von 20000 g/mol, vorzugsweise zwischen 900 und 10000 (gemessen mittels GPC gegen einen Polystyrol-Standard).

Der Anteil an Flüssigkautschuk an der Gesamtzusammensetzung hängt dabei von der erwünschten Rheologie der ungehärteten Zusammensetzung und den erwünschten mechanischen Eigenschaften der ausgehärteten Zusammensetzung ab. Der Anteil an flüssigem Kautschuk oder Elastomer variiert normalerweise zwischen 5 und 50 Gew.-% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in Bezug auf die restlichen Doppelbindungen einzusetzen. Zur Erzielung optimaler Haftung auf den diversen Substraten wird in den besonders bevorzugten Formulierungen anteilig eine Flüssigkautschukkomponente mit Hydroxylgruppen bzw. Säureanhydridgruppen, insbesondere Maleinsäureanhydridgruppen eingesetzt. Mindestens einer der Flüssigkautschuke sollte einen hohen Anteil an cis-1,4-Doppelbindungen, ein weiterer einen hohen Anteil an Vinyldoppelbindungen enthalten.

Bevorzugt kann es auch sein, dass zusätzlich zum flüssigen Polyen bis zu 10 Gew.-%, insbesondere 1-10 Gew.-% mindestens eines Festkautschuks in den Zusammensetzungen enthalten ist. Geeignete Festkautschuke haben im Vergleich zu den Flüssigkautschuken ein signifikant höheres Molekulargewicht (Mw=100000 oder höher). Beispiele für geeignete Kautschuke sind Polybutadien, vorzugsweise mit einem sehr hohen Anteil an cis-1,4-Doppelbindungen (typischerweise über 95%), Styrolbutadienkautschuk, Butadienacrylnitrilkautschuk, synthetischer oder natürlicher Isoprenkaut-schuk, Butylkautschuk oder Polyurethankautschuk.

Für die Zusammensetzungen auf Basis von natürlichen und/oder synthetischen Kautschuken eignen sich eine Vielzahl von Vulkanisationssystemen sowohl auf der Basis von elementarem Schwefel als auch Vulkanisationssysteme ohne elementarem Schwefel, zu letzterem zählen die Vulkanisationssysteme auf der Basis von Thiuramdisulfiden und Peroxiden. Besonders bevorzugt sind Vulkanisationssysteme auf der Basis von elementarem Schwefel und organischen Vulkanisationsbeschleunigern sowie Zinkverbindungen. Der pulverförmige Schwefel wird dabei in Mengen von 0,1 bis 15 Gew.%, bezogen auf die Gesamt-zusammensetzung eingesetzt, besonders bevorzugt werden Mengen zwischen 0,2 und 8 Gew.-%%, ganz besonders bevorzugt zwischen 1 und 4 Gew.-% eingesetzt. Als organische Beschleuniger eignen sich die Dithiocarbamate (in Form ihrer Ammonium- bzw. Metallsalze), Xanthogenate, Thiuram-Verbindungen (Monosulfide und Disulfide), Thiazol-Verbindungen, Aldehyd/Aminbeschleuniger (z.B. Hexamethylentetramin) sowie Guanidinbeschleuniger, wobei ganz besonders bevorzugt Dibenzothiazyldisulfid (MBTS) verwendet wird. Bevorzugt wird auch ein kombiniertes Vulkanisationssystem aus elementarem Schwefel, den oben genannten Beschleunigern und einem Chinonoxim, wie p-Benzochinondioxim, oder einer Nitrosobenzol-Verbindung, wie p-Dinitrosobenzol, verwendet. Die organischen Beschleuniger werden in Mengen zwischen 0,5 und 8 Gew.-% bezogen auf die Gesamtformulierung, bevorzugt zwischen 1 und 3 Gew.-% eingesetzt. Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 0,5 und 10 Gew.-%, vorzugsweise zwischen 1 und 5 Gew.-%. Zusätzlich können weitere typische Kautschukvulkanisationshilfsmittel wie z.B. Fettsäuren (z.B. Stearinsäure) in der Formulierung vorhanden sein.

Das Vulkanisationssystem kann aber auch frei von elementarem Schwefel sein. Beispielsweise können als Vulkanisationssystem Peroxide, vorzugsweise organische Peroxide eingesetzt werden. Beispiele und bevorzugte Peroxide stellen die unten genannten dar. Die Einsatzmengen der Peroxide betragen vorzugsweise: 0,3 - 4,5 Gew.-% bezogen auf die Gesamtzusammensetzung.

Obwohl diese Zusammensetzungen aufgrund des Gehaltes an Flüssigkautschuk mit funktionellen Gruppen in aller Regel bereits eine sehr gute Haftung auf Substraten haben, können, falls erforderlich, Klebrigmacher und/oder Haftvermittler zugesetzt werden. Hierzu eignen sich beispielsweise Kohlenwasserstoffharze, Phenol-harze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen (<1 Gew.%) kann bei manchen Substraten die Haftung verbessern. Hierfür werden dann jedoch vorzugsweise die festen Epoxid-harze mit einem Molekulargewicht deutlich über 700 in fein-gemahlener Form eingesetzt, so dass die Formulierungen trotzdem im Wesentlichen frei von Epoxyharzen sind, insbesondere solchen mit einem Molekulargewicht unter 700. Falls Klebrigmacher bzw. Haftvermittler eingesetzt werden, hängt deren Art und Menge von der Polymerzusammensetzung des Kleb-/ Dichtstoffes, von der gewünschten Festigkeit der gehärteten Zusammensetzung und von dem Substrat, auf welches die Zusammensetzung appliziert wird, ab. Typische klebrig-machende Harze (Tackifier) wie z.B. die Terpenphenolharze oder Harzsäurederivate, werden normalerweise in Konzentrationen zwischen 5 und 20 Gew.-% verwendet, typische Haftvermittler wie Polyamine, Polyaminoamide oder Resorcinderivate werden im Bereich zwischen 0,1 und 10 Gew.-% verwendet.

In einer weiteren bevorzugten Ausführungsform der Zusammensetzungen auf Basis von natürlichen und / oder synthetischen Kautschuken enthält die Zusammensetzung als Bindemittel und Härter:
- 15 bis 70 Gew.-%, vorzugsweise 20 bis 40 Gew.-%, von mindestens einem thermoplastischen Elastomer, vorzugsweise ein Styrol / Butadien oder Styrol / Isopren-Blockcopolymer;
- 5 bis 40 Gew.-%, vorzugsweise 10 bis 20 Gew.-%, mindestens eines nicht-elastomeren Thermoplasten (vorzugsweise ein Ethylen / Vinylacetat oder Ethylen / Methylacrylat-Copolymer) und
- 0,1 bis 4 Gew.-% eines oder mehrerer Vulkanisationsmittel, wobei die obengenannten bevorzugt sind, insbesondere Schwefel.

Bevorzugt wird ein thermoplastisches Elastomer eingesetzt, dessen Erweichungspunkt nicht höher als die Temperatur liegt, bei der das Treibmittel beginnt, aktiviert zu werden, vorzugsweise liegt der Erweichungspunkt mindestens etwa 30 °C niedriger als die Aktivierungstemperatur des Treibmittels. Der Erweichungspunkt wird mittels DSC bestimmt.

Das thermoplastische Elastomer wird vorzugsweise ausgewählt aus der Gruppe bestehend aus thermoplastischen Polyurethanen (TPU) und Block-Copolymere (einschließlich linearer als auch radialer Blockcopolymere) der A-B-, A-B-A-, A-(B-A)n-B- und (A-B)n-Y-Typen, wobei A ein aromatischer Polyvinyl-("hard")-Block ist und der B-Block einen gummiartigen ("soft")-Block aus Polybutadien, Polyisopren oder dergleichen ist, der teilweise hydrogeniert sein kann oder vollständig hydriert ist, Y eine polyfunktionelle Verbindung ist und n eine ganze Zahl von mindestens 3 ist.Die Hydrierung des B-Blocks entfernt ursprünglich vorhandenen Doppelbindungen und erhöht die thermische Stabilität des Blockcopolymers. Vorzugsweise liegt jedoch keine Hydrierung vor.

Geeignete Block-Copolymere umfassen, sind aber nicht beschränkt auf, SBS (Styrol / Butadien / Styrol)-Copolymere, SIS (Styrol / Isopren / Styrol)-Copolymere, SEPS (Styrol / Ethylen / Propylen / Styrol)-Copolymere, SEEPS (Styrol / Ethylen / Ethylen / Propylen / Styrol) oder SEBS (Styrol / Ethylen / Butadien / Styrol)-Copolymere. Besonders geeignete Blockcopolymere sind Styrol / Isopren / Styrol-Triblock-Polymere, als auch ganz oder teilweise hydrierten Derivaten davon, wobei der Polyisopren-Block vorzugsweise einen relativ hohen Anteil von Monomereinheiten, abgeleitet von Isopren mit einer 1,2 und / oder 3,4 Konfiguration enthält.

Vorzugsweise sind mindestens etwa 50% der polymerisierten Isopren-Monomer-Einheiten in einer 1,2 und / oder 3,4-Konfiguration einpolymerisiert, wobei der Rest der Isopren-Einheiten eine 1,4-Konfiguration aufweisen.Solche Block-Copolymere sind zum Beispiel erhältlich von Kuraray Co., Ltd unter dem Handelsnamen HYBRAR.

In bestimmten bevorzugten Ausführungsformen der Erfindung haben die "harten" Blöcke einen Gewichtsanteil von etwa 15 bis etwa 30 Gew.-% des Blockcopolymers und die "weichen" Blöcke einen von etwa 70 bis etwa 85 Gew.-% des Blockcopolymers.

Die Glasübergangstemperatur der "weichen" Blöcken liegt vorzugsweise bei etwa -80 ° C bis etwa 10 ° C, während die Glasübergangstemperatur von den "harten" Blöcken vorzugsweise bei etwa 90 ° C bis etwa 110 ° C liegt. Der Schmelzflußindex des Blockcopolymers beträgt vorzugsweise etwa 0,5 bis etwa 6 g/10 min (gemessen nach ASTM D1238, 190 ° C, 2,16 kg). Bevorzugt weist das Block-Copolymer ein zahlenmittleres Molekulargewicht von etwa 30.000 bis etwa 300.000, gemessen mittels GPC gegen einen Polystyrol-Standard.

Als thermoplastische Elastomere können auch thermoplatische Polyurethane (TPU) eingesetzt werden, als auch andere Blockcopolymere, die harte und weiche Segmente enthalten, wie beispielsweise Polystyrol/Polydimethylsiloxan-Blockcopolymere, Polysulfon/Polydimethylsiloxan-Blockcopolymere, Polyester / Polyether-Blockcopolymere (z. B. Copolyester wie die aus Dimethylterephthalat, Poly(tetramethylenoxid)glykol und Tetramethylenglykol), Polycarbonat/Polydimethylsiloxan-Blockcopolymere und Polycarbonat/Polyether-Blockcopolymere.

Thermoplastische Elastomere, die nicht Blockcopolymere sind, sind in der Regel fein interdispergiert Mehrphasensysteme oder Legierungen und können ebenfalls verwendet werden, einschließlich Mischungen von Polypropylen mit Ethylen-Propylen-Kautschuke (EPR) oder Ethylen-Propylen-Dien-Monomer (EPDM)-Kautschuke.

In dieser Ausführungsform mit einem oder mehreren thermoplastischen Elastomeren enthält das expandierbare Material vorzugsweise ein oder mehrere nicht-elastomere Thermoplasten.Dabei wird der nicht-elastomere Thermoplast unter anderem ausgewählt, um die Hafteigenschaften und Verarbeitbarkeit der expandierbaren Zusammensetzung zu verbessern.

Im Allgemeinen wird es wünschenswert sein, einen nicht-elastomeren Thermoplasten einzusetzen, dessen Erweichungspunkt nicht höher als die Temperatur liegt, bei der das Treibmittel beginnt, aktiviert zu werden, vorzugsweise mindestens etwa 30 ° C niedriger als diese Temperatur.

Zu dem besonders bevorzugten nicht-elastomeren Thermoplasten gehören Olefinpolymere, insbesondere Copolymere von Olefinen (z. B. Ethylen) mit nicht-olefinischen Monomeren (z. B. Vinylester, wie Vinylacetat und Vinylpropionat, (Meth)acrylatester, wie C1 bis C6-Alkylester von Acrylsäure und Methacrylsäure). Ethylen / Vinylacetat-Copolymere (speziell Copolymere mit einen Anteil von etwa 16 bis etwa 35 Gew.-% Vinylacetat) und Ethylen / Methylacrylat-Copolymere (insbesondere Copolymere mit einem Anteil von etwa 15 bis etwa 35 Gew.-% Methylacrylat).

In bestimmten Ausgestaltungen dieser Ausführungsform beträgt das Gewichtsverhältnis von thermoplastischem Elastomer zu nicht-elastomeren Thermoplast mindestens 0,5:1 oder zumindest 1:1 und / oder nicht mehr als 5:1 oder 2,5:1.

Das klebrigmachende Harz kann innerhalb der Gruppe bestehend aus Kolophonium, Terpenharze, Terpenphenolharze, Kohlenwasserstoffharze aus gecrackten Erdöldestillaten stammten, aromatische klebrigmachende Harze, Tallöl, Ketonharze und Aldehydharze ausgewählt werden.Geeignete Kolophonium-Harze sind insbesondere aus Abietinsäure, Lävopimarsäure, Neoabietinsäure, Dextropimarsäure, Palustrinsäure, Alkylester der vorstehend genannten Harzsäuren und hydrierte Produkte von Harzsäurederivaten.

Beispiele für geeignete Weichmacher sind Alkylester zweibasiger Säuren (z. B. Phthalat-Ester), Diarylether, Benzoate von Polyalkylenglykolen, organische Phosphate und Alkylsulfonsäureester von Phenol oder Kresol.

Ein weiterer bevorzugter Gegenstand der Erfindung enthält als Bindemittelsystem mindestens ein peroxidisch vernetzbares Polymer und mindestens ein Peroxid als Härter.

Als peroxidisch vernetzbare Polymere kommen prinzipiell alle thermoplastischen Polymere und thermoplastischen Elastomere in Frage, die sich peroxidisch vernetzen lassen. Als "peroxidisch vernetzbar" bezeichnet der Fachmann derartige Polymere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

In einer bevorzugten Ausführungsform ist das mindestens eine peroxidisch vernetzbare Polymer ausgewählt aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, Ethylen-Acrylester-Copolymeren und Polyolefinen, wie beispielsweise Polyethylen oder Polypropylen.

Unter einem funktionalisierten Copolymeren wird dabei erfindungsgemäß ein Copolymer verstanden, das mit zusätzlichen Hydroxidgruppen, Carboxygruppen, Anhydridgruppen, Acrylatgruppen und/oder Glycidylmethacrylat-Gruppen versehen ist.

Besonders vorteilhaft im Sinne der vorliegenden Erfindung sind Ethylen-Vinylacteat-Copolymere, funktionalisierte Ethylen-Vinylacetat-Copolymere, funktionalisierte Ethylen-Butylacrylat-Copolymere, Ethylen-Propylen-Dien-Copolymere, Styrol-Butadien-Blockcopolymere, Styrol-Isopren-Blockcopolymere, Ethylen-Methylacrylat-Copolymere, Ethylen-Ethylacrylat-Copolymere, Ethylen-Butylacrylat-Copolymere und Ethylen-(Meth)acrylsäure-Copolymere.

Besonders gute Haftungseigenschaften insbesondere auf geöltem Blech können erzielt werden, wenn erfindungsgemäße thermisch härtbare Zubereitungen eingesetzt werden, die ein oder mehrere Ethylen-Vinylacetat-Copolymere als alleinige peroxidisch härtbare Polymere enthalten, das heißt, dass die thermisch härtbaren Zubereitungen außer den Ethylen-Vinylacetat-Copolymeren im Wesentlichen frei sind von weiteren peroxidisch härtbaren Polymeren.

Thermisch expandierbare Zubereitungen sind erfindungsgemäß "im Wesentlichen frei von weiteren peroxidisch härtbaren Polymeren", wenn sie weniger als 3 Gew.-%, vorzugsweise weniger als 1,5 Gew.-%, ganz besonders bevorzugt weniger als 0,5 Gew.-% eines peroxidisch vernetzbaren Polymeren enthalten, das kein Ethylen-Vinylacetat-Copolymer ist.

Thermisch expandierbare Zubereitungen, die mindestens ein Ethylen-Vinylacetat-Copolymer mit einem Vinylacetatanteil von 9 bis 30 Gew.-%, insbesondere von 15 bis 20 Gew.-%, ganz besonders von 17,5 bis 19 Gew.-%, bezogen auf die Gesamtmasse des Copolymeren, enthalten, sind erfindungsgemäß besonders bevorzugt.

Weiterhin hat es sich als vorteilhaft erwiesen, wenn die thermisch expandierbare Zubereitung ein peroxidisch vernetzbares Polymer, insbesondere ein Ethylen-Vinylacetat-Copoylmer, mit einem Schmelzindex von 0,3 bis 400 g/10min, insbesondere von 0,5 bis 45 g/10min, enthält. Peroxidisch vernetzbare Polymere, insbesondere Ethylen-Vinylacetat-Copolymere, mit einem Schmelzindex von 1,5 bis 25 g/10min, insbesondere von 2 bis 10 g/10 min, ganz besonders von 2 bis 8 g/10min sind vorteilhaft. Es kann erfindungsgemäß vorteilhaft sein, wenn zwei oder mehrere Polymere mit verschiedenen Schmelzindices in den thermisch expandierbaren Zubereitungen eingesetzt werden.

Der Schmelzindex wird hierfür in einem Kapillarrheometer bestimmt, wobei das Polymer bei 190°C in einem beheizbaren Zylinder aufgeschmolzen und unter einem durch die Auflagelast (2,16kg) entstehenden Druck durch eine definierte Düse (Kapillare) gedrückt wird (ASTM D1238). Ermittelt wird die austretende Masse als Funktion der Zeit.

Die thermisch expandierbaren Zubereitungen enthalten vorzugsweise mindestens 30 Gew.-% mindestens eines peroxidisch vernetzbaren Polymeren. Thermisch expandierbare Zubereitungen, die 40 bis 90 Gew.-%, insbesondere 50 bis 80 Gew.-%, mindestens eines peroxidisch vernetzbaren Polymers jeweils bezogen auf die Gesamtmasse der Zusammensetzung enthalten, sind besonders bevorzugt.

Als weiteren Bestandteil neben den peroxidisch vernetzbaren Polymeren können die thermisch expandierbaren Zubereitungen vorzugsweise mindestens ein niedermolekulares multifunktionelles Acrylat enthalten

Unter einem "niedermolekularen multifunktionellen Acrylat" wird eine Verbindung verstanden, die mindestens zwei Acrylatgruppen aufweist und ein Molgewicht unterhalb von 2400g/mol, vorzugsweise unterhalb von 800g/mol, aufweist. Als vorteilhaft haben sich insbesondere derartige Verbindungen erwiesen, die zwei, drei oder mehr Acrylatgruppen pro Molekül aufweisen.

Bevorzugte difunktionelle Acrylate sind Ethylenglycol-Dimethacrylat, Diethylenglycol-Dimethacrylat, Triethlenglycol-Dimethacrylat, Triethlenglycol-Diacrylat, Tripropyleneglycol-Dimethacrylat, 1,4-Butandiol-Dimethacrylat, 1,3 Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol- Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Di-pentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, TrimethylolpropanTrimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitung die ein niedermolekulares multifunktionelles Acrylat ausgewählt aus Triethylenglykoldiacrylat, Triethlenglycol-Dimethacrylat, Trimethylolpropantriacrylat (TMPTA) und Trimethylolpropantrimethacrylat (TMPTMA), Pentaerythritol-Triacrylat (TMM), Tetramethylolmethan- Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß ganz besonders bevorzugt.

Neben den niedermolekularen Acrylaten können die thermisch expandierbaren Zubereitungen weitere Covernetzer, wie beispielsweise Allylverbindungen, wie Triallyl-cyanurat, Triallylisocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enhtalten.

Dabei hat es sich als besonders vorteilhaft erwiesen, wenn die thermisch expandierbaren Zubereitungen mindestens ein niedermolekulares multifunktionelles Acrylat ausgewählt aus Triethylenglykoldiacrylat, Trimethylolpropantriacrylat (TMPTA) und Trimethylolpropantrimethacrylat (TMPTMA) enthalten.

Die niedermolekularen multifunktionellen Acrylate sind in den thermisch expandierbaren Zubereitungen vorzugsweise in einer Menge von 0,2 bis 2,5 Gew.-%, insbesondere von 0,4 bis 1,4 Gew.-%, jeweils bezogen auf die Gesamtmasse der thermisch expandierbaren Zubereitung enthalten.

Als Härtersystem für die peroxidisch vernetzbares Polymere enthalten die thermisch expandierbaren Zubereitungen bevorzugt mindestens ein Peroxid. Insbesondere sind die organischen Peroxide geeignet, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide) und 4,4- Di-tert-butylperoxy-n-butyl-valerate.

Besonders bevorzugt sind die beispielsweise kommerziell von der Firma Akzo Nobel vertriebenen Peroxide, wie 3,3,5,7,7-Pentamethyl-1,2,4-trioxepan, 2,5-Dimethyl-2,5-di(tert-butylperoxy)hex-3-in, Di-tert-butylperoxid, 2,5-Dimethyl-2,5-di(tert-butylperoxy)hexan, tert-Butylcumylperoxid, Di(tert-butylperoxyisopropyl)benzol, Dicumylperoxid, Butyl-4,4-di(tert-butylperoxi)valerat, tert-Butylperoxy-2-ethylhexylcarbonat, 1,1-Di-(tert-butylperoxy)-3,3,5-trimethylcyclohexan, tert-Butylperoxybenzoat, Di-(4-methylbenzoyl)peroxid und Dibenzoylperoxid.

Es hat sich weiterhin als vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es, wenn das eingesetzte Peroxid bei 65°C eine Halbwertszeit von mehr als 60 Minuten aufweist, dass heißt, dass nach einer Erhitzung der thermisch expandierbaren Zubereitung enthaltend das Peroxid auf 65°C für 60 Minuten sich weniger als die Hälfte des eingesetzten Peroxids zersetzt hat. Erfindungsgemäß können solche Peroxide besonders bevorzugt sein, die bei 115°C eine Halbwertszeit von 60 Minuten aufweisen.

Besonders bevorzugt ist mindestens ein Peroxid ausgewählt aus der Gruppe aus Di(tert-butylperoxyisopropyl)benzol, Dicumylperoxid, 1,1-Di-(tert-butylperoxy)-3,3,5-trimethylcyclohexan, Dibenzoylperoxid und Di-tert-butyl- 1,1,4,4-tetramethylbut-2-in-1,4-ylendiperoxid enthalten.

Ferner ist es erfindungsgemäß vorteilhaft, wenn mindestens ein oder die Peroxide in einer auf einen festen inerten Träger, wie beispielsweise Calciumcarbonat und/oder Silica und/oder Kaolin, aufgebrachten Form eingesetzt werden.

Vorzugsweise wird das Peroxid so ausgewählt, dass die Vernetzungstemperatur T90 unterhalt, vorzugsweise 15 - 35 °C unterhalb der Zersetzungstemperatur des endothermen Treibmittels liegt. Dadurch werden eine hohe Gasausbeute und damit eine hohe Expansion des Materials begünstigt. Beispielhafte Ausführungen wären ein Peroxid (T90 = 105 °C) mit Natriumbicarbonat Start-Zersetzungstemperatur 130 °C oder ein Peroxid (T90 = 170 °C) mit Zitronensäure Start-Zersetzungstemperatur 195 °C. Die Vernetzungstemperatur T90 definiert sich als die Temperatur, bei der eine 90%ige Vernetzung des Materials innerhalb von 12 Minuten erreicht wird.

Das mindestens eine oder die Peroxide sind in den erfindungsgemäßen thermisch expandierbaren Zubereitungen vorzugsweise in einer Menge von 0,2 bis 2 Gew.-%, insbesondere in einer Menge von 0,5 bis 1,3 Gew.-%, jeweils bestimmt als Aktivsubstanzgehalt an Peroxid bezogen auf die Gesamtmasse der thermisch expandierbaren Zubereitung, enthalten.

Weiterhin ist es von Vorteil, wenn das Massenverhältnis des mindestens einen Peroxids zu dem mindestens einen niedermolekularen multifunktionellen Acrylat mindestens 1:3 beträgt. Ein Massenverhältnis von mindestens 1:3 ist erfindungsgemäß immer dann erreicht, wenn die Formulierung bezogen auf 1g Peroxid höchstens 3g niedermolekulares multifunktionelles Acrylat enthält. Ein Massenverhältnis von mindestens 1:2,5, insbesondere von mindestens 1:1,6 ist besonders bevorzugt.

Durch die Wahl dieses Massenverhältnisses ist es erfindungsgemäß möglich, dass die Anbindung, das heißt Haftung am gegenüberliegenden Blech, verbessert wird. Es wurde gefunden, dass die erfindungsgemäßen thermisch expandierbaren Zubereitungen insbesondere in Engstellen des abzudichtenden Systems eine bessere Haftung aufweisen, da der Schaum selbst bis in kleinste Ecken und spitze Winkel vordringt und somit eine vollständigere Abdichtung des Systems ermöglicht.

Ein ganz besonders bevorzugter Gegenstand der vorliegenden Erfindung sind Zusammensetzungen, die als Bindemittel und Härter
- mindestens eine Triglyceridfraktion, deren Fettsäurenverteilung einen Anteil von mindestens 5Gew.-%, insbesondere von mindestens 60Gew.-%, einer oder mehrerer Ω-3-Fettsäure(n) und/oder einer oder mehrerer Ω-6-Fettsäure(n) aufweist,
- mindestens ein Vulkanisationsmittel ausgewählt aus der Gruppe, bestehend aus
   - Schwefel,
   - peroxidischen Vulkanisationsmitteln,
   - Chinonen und/oder Chinondioximen und/oder
   - Dinitrosobenzolen; und
- optional mindestens ein synthetisches Polymer, das mindestens eine C=C-Doppelbindung und/oder mindestens eine CΞC-Dreifachbindung aufweist, enthalten.

Die mindestens eine Triglyceridfraktion hat eine Fettsäurenverteilung mit einen Anteil von mindestens 5Gew.-%, insbesondere von mindestens 10Gew.-%, ganz besonders bevorzugt von mindestens 60Gew.-%, einer oder mehrerer Ω-3-Fettsäure(n) und/oder einer oder mehrerer Ω-6-Fettsäure(n).

Unter einer "Triglyceridfraktion" wird erfindungsgemäß die Summe aller in der Zubereitung enthaltenen Triglyceride, das heißt der Dreifachester des Glycerins mit drei Fettsäuremolekülen, verstanden. Dabei spielt es zur Bestimmung der Triglyceridfraktion keine Rolle, aus welchem eingesetzten Rohstoff die Triglyceride stammen.

Die Fettsäurenverteilung einer Triglyceridfraktion gibt erfindungsgemäß die Masseanteile der unterschiedlichen Fettsäuren bezogen auf die Gesamtmasse der Fettsäuren in der Triglyceridfraktion an; die unterschiedlichen Anteile werden dabei üblicherweise nach Freisetzung der Fettsäuren als Methylester gaschromatographisch bestimmt. Die Masse des Glycerins geht dementsprechend in diese Berechnung nicht mit ein.

Erfindungsgemäß bevorzugte Ω-3-Fettsäuren sind: Hexadecatriensäure (16:3; (ω-3)), Alpha-Linolensäure (18:3 (ω-3)), Stearidonsäure (18:4; (ω-3)), Eicosatriensäure (20:3; (ω-3)), Eicosatetraensäure (20:4; (ω-3)), Eicosapentaensäure (20:5; (ω-3)), Heneicosapentaensäure (21:5; (ω-3)), Docosapentaensäure (22:5; (ω-3)), Docosahexaensäure (22:6; (ω-3)), Tetracosapentaensäure (24:5; (ω-3)) und Tetracosahexaensäure (24:6; (ω-3)). Ganz besonders bevorzugte Ω-3-Fettsäuren sind Alpha-Linolensäure (18:3 (ω-3)) und Eicosapentaensäure (20:5; (ω-3)). Die Alpha-Linolensäure (18:3 (ω-3)) ist eine ganz besonders bevorzugte Ω-3-Fettsäure.

Erfindungsgemäß bevorzugte Ω-6-Fettsäuren sind: Linolsäure (18:2; (ω-6)), Gamma-Linolensäure (18:3; (ω-6)), Calendulasäure (18:3; (ω-6)), Eicosadiensäure (20:2; (ω-6)), Dihomogammalinolensäure (20:3; (ω-6)),

Arachidonsäure (20:4; (ω-6)), Docosadiensäure (22:2; (ω-6)), Docosatetraensäure (22:4; (ω-6)), Docosapentaensäure (22:5; (ω-6)), Tetracosatetraensäure (24:4; (ω-6)) und Tetracosapentaensäure (24:5; (ω-6)).

Besonders bevorzugte Ω-6-Fettsäuren sind Linolsäure (18:2; (ω-6)), Gamma-Linolensäure (18:3; (ω-6)) und Arachidonsäure (20:4; (ω-6)), wobei die Linolsäure (18:2 (ω-6)) eine ganz besonders bevorzugte Ω-6-Fettsäure ist.

Besonders gute mechanische Eigenschaften konnten erhalten werden, wenn die Triglyceridfraktion eine Fettsäurenverteilung mit einem Anteil von mindestens 4Gew.-%, insbesondere mindestens 15Gew.-%, einer oder mehrerer Ω-3-Fettsäure(n) aufweist.

Es hat sich als erfindungsgemäß vorteilhaft erwiesen, wenn mindestens 40Gew.-%, insbesondere 60Gew.-%, ganz besonders 100Gew.-% der Triglyceridfraktion bei 25°C flüssig ist, das heißt in Form eines Öles vorliegt.

Weiterhin hat es sich als vorteilhaft erwiesen, wenn die Triglyceridfraktion mit den Anteilen an Ω-3-Fettsäuren und/oder Ω-6-Fettsäuren aus einer natürlichen Quelle, beispielsweise entsprechenden pflanzlichen und/oder tierischen Ölen stammen. Obwohl pflanzliche Öle dabei besonders bevorzugt sind, ist auch ein Einsatz von tierischen Ölen, wie beispielsweise Fischöl oder Lebertranöl mit umfasst.

Erfindungsgemäße Triglyceridfraktionen sind beispielsweise in Sonnenblumenöl, Rapsöl, Sojaöl, Tallöl, Leindotteröl, Tungöl, Leinöl und/oder Hanföl enthalten. Rapsöl, Sojaöl, Tallöl, Leindotteröl, Tungöl, Leinöl und/oder Hanföl sind erfindungsgemäß bevorzugt; Tallöl, Leindotteröl, Tungöl, Leinöl und/oder Hanföl sind erfindungsgemäß besonders bevorzugt; Tungöl, Leinöl und Hanföl sind erfindungsgemäß insbesondere bevorzugt. Der Einsatz von Leinöl ist ganz besonders bevorzugt. Auch der Einsatz einer Kombination aus zwei, drei oder mehreren geeigneten Ölen ist bevorzugt.

Die Triglyceridfraktion, beziehungsweise das die Triglyceridfraktion enthaltende Öl, ist in den erfindungsgemäßen Zusammensetzungen vorzugsweise in einer Menge von 5 bis 50 Gew.-%, insbesondere von 10 bis 40 Gew.-% enthalten.

Als Härter für die Triglyceridfraktion enthalten die Zusammensetzungen vorzugsweise mindestens ein speziell ausgewähltes Vulkanisationssystem ausgewählt aus der Gruppe, bestehend aus:
(b1) Schwefel,
(b2) peroxidischen Vulkanisationssystemen,
(b3) Chinonen und/oder Chinondioximen und/oder
(b4) Dinitrosobenzolen.

In einer ersten bevorzugten Ausführungsform wird als Vulkanisationsmittel synthetischer oder natürlicher Schwefel eingesetzt. Vorzugsweise wird erfindungsgemäß pulverförmiger Schwefel verwendet; es kann aber auch zur Vermeidung von Staubbelastung in der Produktion bevorzugt sein, Schwefel in Abmischung mit einem Staub-bindenden Mittel, beispielsweise vermischt mit Mineralöl, Paraffinöl oder Siliziumdioxid einzusetzen. Dabei kann der Gehalt der Staub-bindenden Öle durchaus so gewählt sein, dass eine Schwefel-haltige Paste als Rohstoff zum Einsatz kommt. Bevorzugt wird Schwefel in der S8-Konfiguration verwendet.

Der Aktivsubstanzgehalt an Schwefel in den erfindungsgemäßen Zubereitungen kann dabei in weiten Grenzen variieren, er kann bis zu 20 Gew.-%, vorzugsweise bis etwa 15 Gew.-%, insbesondere bis zu 10Gew.-%, jeweils bezogen auf die gesamte Zubereitung, betragen; die Untergrenze sollte vorzugsweise nicht unter 0,5 Gew.-% liegen. Dabei hängt der Gehalt an Schwefel von der Reaktivität des eingesetzten Systems sowie gegebenenfalls dem Einsatz von Polymerisationsadditiven ab.

In einer zweiten bevorzugten Ausführungsform werden radikalische Vulkanisationsmittel, auf der Basis von organischen oder anorganischen Peroxiden, eingesetzt. Beispiele für erfindungsgemäß bevorzugte Peroxide sind Diacetylperoxid, Di-tert.butylperoxid, Dicumylperoxid sowie Dibenzoylperoxid. Die Peroxide sind als Vulkanisationsmittel in den erfindungsgemäßen Zubereitungen in Mengen von 0,2 Gew.-% bis 3 Gew.-% enthalten.

In einer dritten bevorzugten Ausführungsform werden Chinone und/oder Chinondioxime als Vulkanisationsmittel eingesetzt. Ein besonders bevorzugter Vertreter dieser Gruppe ist das p-Benzochinondioxim. Die Chinone und/oder Chinondioxime werden in den Zusammensetzungen vorzugsweise in Konzentrationen von 0,2 Gew.-% bis 5 Gew.-% eingesetzt.

Diese Chinon-basierten Vulkanisationsmittel werden bevorzugt phlegmatisiert in Pastenform, beispielsweise in Abmischung wie Mineralölen, verwendet, wobei der Aktivsubstanzgehalt üblicherweise von 40 Gew.-% und 70 Gew.-% beträgt.

Schwefel ist ein ganz besonders bevorzugtes Vulkanisationsmittel als Härter für die Triglyceridfraktion.

In einer vierten bevorzugten Ausführungsform werde Dinitrosobenzole, insbesondere das 1,4-Dinitrosobenzol, als Vulkanisationsmittel verwendet. Diese Stoffgruppe wird vorzugsweise in den erfindungsgemäßen Zubereitungen in einer Konzentration von 0,2 Gew.-% bis 5 Gew.-%, jeweils bezogen auf die gesamte heiß-härtbare Zubereitung, eingesetzt.

Dabei hat es sich unabhängig von der speziellen Ausführungsform als besonders vorteilhaft erwiesen, wenn das Vulkanisationsmittel in Kombination mit organischen Härtungsbeschleuniger, wie beispielsweise Mercaptobenzothiazol, Dithiocarbamaten, Sulfenamiden, Disulfiden wie beispielsweise Dibenzothiazoldisulfid und/oder Thiuramdisulfiden, Aldehyd-Amin-Beschleunigern, Guanidinen, und/oder Metalloxiden, wie beispielsweise Zinkoxid, eingesetzt wird. Zusätzlich können typische Kautschukvulkanisationshilfsmittel wie beispielsweise Fettsäuren (beispielsweise Stearinsäure) in der Formulierung vorhanden sein.

Der Gehalt an organischem Härtungsbeschleuniger kann vorzugsweise zwischen 0 und etwa 10 Gew.-% variieren. Auch der Gehalt an Metalloxiden liegt vorzugsweise im Bereich zwischen 0 und 10 Gew.-%.

Weiterhin hat es sich als vorteilhaft erwiesen, wenn die heiß-härtbaren Zubereitungen zusätzlich zu der ungesättigten Triglyceridfraktion weiterhin mindestens ein synthetisches Polymer enthalten, das mindestens eine C=C-Doppelbindung und/oder mindestens eine CΞC-Dreifachbindung aufweist. Diese Polymere sind vorzugsweise aus der folgenden Gruppe der Homo- und/oder Copolymeren ausgewählt:
- Polybutadiene, insbesondere die 1,4- und 1,2-Polybutadiene,
- Polybutene,
- Polyisobutylene,
- 1,4-Polyisoprene,
- Styrol-Butadien-Copolymere und
- Butadienacrylnitril-Copolymere,
wobei diese Polymeren endständige und/oder (statistisch verteilte) seitenständige funktionelle Gruppen haben können. Beispiele für derartige funktionelle Gruppen sind Hydroxy-, Carboxyl-, Carbonsäure-anhydrid- oder Epoxygruppen, insbesondere Maleinsäureanhydridgruppen. Diese Polymere können insbesondere aus den oben genannten Polyene ausgewählt werden und in den gleichen Mengen vorliegen.

Die erfindungsgemäßen Zusammensetzungen enthalten weiterhin ein thermisch aktivierbares Treibmittel. Als thermisch aktivierbare Treibmittel eignen sich im Prinzip alle bekannten thermisch aktivierbaren Treibmittel wie beispielsweise "chemische Treibmittel", die bei thermischer Behandlung durch Zersetzung Gase freisetzen, oder "physikalische Treibmittel", dass heißt insbesondere thermisch expandierbare Hohlkugeln.

Unter einem chemischen Treibmittel werden erfindungsgemäß Verbindungen verstanden, die sich bei Einwirkung von Wärme zersetzen und dabei Gase freisetzen. Dabei können exotherme als auch endotherme chemische Treibmittel eingesetzt werden.

Beispiele für geeignete exotherme chemische Treibmittel sind Azoverbindungen, Hydrazidverbindungen, Nitrosoverbindungen und Carbazidverbindungen, wie beispielsweise Aazobisisobutyronitril, Azodicarbonamid (ADCA), Di-nitroso-pentamethylentetramin, 4,4'-Oxybis(benzolsulfonsäure hydrazid) (OBSH), 4-Methylbenzolsulfonsäurehydrazid, Azocyclohexylnitril, Azodiaminobenzol, Benzol-1,3-sulfonylhydrazid, Calciumazid, 4,4'-Diphenyldisulfonylazid, Diphenyl-sulfon-3,3'-disulfohydrazid, Benzol-1,3-disulfohydrazid, Trihydrazinotriazin, p-Toluolsulfonylhydrazid and p-Toluolsulfonylsemicarbazid.

Die exothermen chemischen, thermisch aktivierbaren Treibmittel sind erfindungsgemäß vorzugsweise in einer Menge von 0,5 bis 6Gew.-%, insbesondere von 0,7 bis 3Gew.-%, jeweils bezogen auf die gesamte Anwendungszubereitung enthalten.

Die erfindungsgemäßen Zusammensetzungen können vorzugsweise auch ein endothermes chemisches Treibmittel, insbesondere ausgewählt aus Bicarbonaten, festen, optional funktionalisierten, Polycarbonsäuren und deren Salzen und Mischungen daraus, enthalten. Geeignete Bicarbonate (Hydrogencarbonate) sind solche der Formel XHCO3, wobei X ein beliebiges Kation sein kann, insbesondere ein Alkalimetallion, vorzugsweise Na+ oder K+, wobei Na+ äußerst bevorzugt ist. Weitere geeignete Kationen X+ können ausgewählt sein aus NH4+, ½ Zn2+,½ Mg2+,½ Ca2+ und deren Mischungen. Geeignete Polycarbonsäuren schließen ein, ohne darauf beschränkt zu sein, feste, organische Di-, Tri- oder Tetrasäuren, insbesondere Hydroxyfunktionalisierte oder ungesättigte Di-, Tri-, Tetra- oder Polycarbonsäuren, wie beispielsweise Citronensäure, Weinsäure, Äpfelsäure, Fumarsäure und Maleinsäure. Besonders bevorzugt ist die Verwendung von Citronensäure. Citronensäure ist unter anderem deshalb vorteilhaft, da es ein ökologisch nachhaltiges Treibmittel darstellt. Besonders bevorzugte Treibmittel sind Natriumbicarbonat und/oder Zitronensäure/Citrate, ganz besonders bevorzugt ist das Treibmittel eine Mischung von Natriumbicarbonat und Zitronensäure/Citrat.

In verschiedenen Ausführungsformen enthalten die Zusammensetzungen mindestens ein endothermes chemisches Treibmittel in einer Menge von 0,1 bis 35 Gew.-%,, bevorzugt 1 bis 30 Gew.-%, bevorzugt 2 bis 30 Gew.-%, besonders bevorzugt 5 bis 25 Gew.-%, ganz besonders bevorzugt 10 bis 25 Gew.-%, jeweils bezogen auf die Gesamtzusammensetzung. Dabei beziehen sich die Gew.-%, soweit nicht anders beschreiben, auf die Gesamtzusammensetzung vor der Expansion.

Als physikalische Treibmittel können expandierbare Kunststoffmikrohohlkugeln auf der Basis von Polyvinylidenchlorid¬copolymeren oder Acrylnitril/(Meth)acrylat-Copolymeren eingesetzt werden. Diese sind beispielsweise unter den Namen "Dualite^{®}" beziehungsweise "Expancel^{®}" von den Firmen Pierce & Stevens beziehungsweise Akzo Nobel im Handel erhältlich.

Es kann erfindungsgemäß bevorzugt sein, in den thermisch expandierbaren Zubereitungen eine Kombination aus mindestens einem chemischen, thermisch aktivierbaren Treibmittel und mindestens einem physikalischen, thermisch aktivierbaren Treibmittel einzusetzen.

Die Menge an Treibmittel wählt man vorzugsweise so, dass sich das Volumen der thermisch expandierbaren Masse beim Erwärmen auf Aktivierungstemperatur (oder Expansionstemperatur) um mindestens 5 %, vorzugsweise mindestens 10 % und insbesondere mindestens 20 % irreversibel vergrößert. Hierunter ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (22 °C) beim Erwärmen auf die Aktivierungstemperatur irreversibel derart vergrößert, dass es nach dem Wiederabkühlen auf Raumtemperatur um mindestens 5 %, vorzugsweise um mindestens 10 % und insbesondere mindestens 20 % größer ist als vor der Erwärmung. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads, also der irreversiblen Volumenvergrößerung, kann man durch die Wahl der Menge des Treibmittels so einstellen, dass sie unter 300 %, insbesondere unter 200 % liegt.

Die Aktivierungstemperatur liegt vorzugsweise im Bereich von 120 bis 220 °C. Diese Temperatur soll vorzugsweise für eine Zeitdauer im Bereich von 10 bis 150 Minuten aufrecht gehalten werden. Vorzugsweise enthält die Klebstoffzusammensetzung 0,1 bis 15 Gew.-%, vorzugsweise 0,1 bis 5 Gew.-%, insbesondere 0,1 bis 2 Gew.-%, des mindestens einen thermisch aktivierbaren Treibmittels. Desweitern enthält die Zusammensetzung mindestens einen Leichtfüllstoff, wobei als Leichtfüllstoff geblähte Partikel mindestens eines glasreichen vulkanischen Gesteins mit einer geschlossenen Außenschale verwendet werden. Ausgangsstoff bzw. Rohstoff für diesen Leichtfüllstoff ist wenigstens ein glasreiches vulkanisches Gestein, das gebundenes Wasser (z.B. Kristallwasser) enthält und somit blähbar ist. Als Ausgangsstoff bzw. Rohstoff eignen sich insbesondere die Gesteine Obsidian und/oder

Bims, vorzugsweise Obsidian, ganz besonders bevorzugt Perlit. Diese Rohstoffe sind zum einen kostengünstig und zum anderen sehr stabil, so dass die geblähten Partikel aus mindestens einem glasreichen vulkanischen Gestein, insbesondere aus Perlit, im Vergleich zu anderen Leichtfüllstoffen günstig sind und zudem druckstabil sind. Aufgrund der Druckstabilität eignen sich diese Partikel insbesondere für pumpbare Zusammensetzungen.

Die geblähten Partikel mit geschlossener Außenschale können hergestellt werden, indem das vulkanische Gestein, insbesondere Perlit, in einem thermischen Blähverfahren (beispielsweise mit Temperaturen von etwa 700 bis 1000°C) aufgebläht wird, wobei das Glas zu glühen beginnt und sein Volumen vervielfacht. Um ein Zerbersten der Partikel beim Blähen zu verhindern und geblähte Partikel mit einer geschlossenen, vorzugsweise glas- oder sinterartigen Oberfläche bzw. mit einer geschlossenzelligen Struktur zu erhalten, ist auf eine gleichmäßige Wärmeverteilung zu achten.

Die erfindungsgemäßen Partikel, vorzugsweise aus Perlit, weisen eine geschlossene Außenschale auf, insbesondere weisen die Partikel eine geschlossenzellige Kugelstruktur auf. Aufgrund der geschlossenen Außenschale kann kein Bindemittel, kein anderer Bestandteil der Zusammensetzung und auch kein Wasser in den Leichtfüllstoff eindringen, was die resultierenden Eigenschaften der Zusammensetzung, wie beispielsweise die Dichte, die Härte oder die Haftungseigenschaften, negative beeinflussen könnte.

Die geblähten Partikel mindestens eines glasreichen vulkanischen Gesteins mit einer geschlossenen Außenschale, insbesondere die geblähten Perlit-Partikel mit einer geschlossenen Außenschale, haben vorzugsweise eine maximale Korngröße von keiner 1000 µm, insbesondere kleiner 750 µm, bevorzugt kleiner 500 µm, besonders bevorzugt kleiner 400 µm (bestimmbar mittels Siebanalyse, wobei ein Sieb mit der entsprechenden Maschengröße alle Partikel hindurch lässt). In einer bevorzugten Ausführungsform weisen die geblähten Partikel einer gewichtsmittleren Korngröße d50 von kleiner 500 µm, insbesondere von kleiner 300 µm auf. Bevorzugt sind geblähte Partikel mit einer gewichtsmittleren Korngröße d50 von 10 bis 500 µm, insbesondere von 20 bis 200 µm, vorzugsweise von 30 bis 125 µm (bestimmbar mittels Siebanalyse).

Besonders bevorzugt weisen die geblähten Partikel als Leichtfüllstoff ein Schüttgewicht von kleiner 500 kg/m³, insbesondere von 10 bis 500 kg/m³, vorzugsweise von 100 bis 400 kg/m³, bevorzugt von 200 bis 270 kg/m³ auf.

Zusammensetzungen, die geblähte Partikel mit den bevorzugten Größen bzw. Schüttgewichten enthalten, sind besonders homogen zu vermischen und besonders gut pumpbar, was sowohl die Handhabung als auch die mechanischen Eigenschaften der resultierenden Produkte verbessert.

Bevorzugt kann zudem sein, wenn die Oberfläche der geblähten Partikel modifiziert worden ist. Insbesondere weist die Oberfläche funktionale Gruppen, wie Hydroxyl-, Schwefel-, Säure- und/oder Säureanhydridgruppen, auf. Bevorzugt kann die Oberfläche auch mit Organosilanen silanisiert werden, insbesondere mit schwefelhaltigen Organosilanen. Die Silanisierung mit schwefelhaltigen Organosilanen kann beispielsweise mit dem Organosilan Si-69 von Evonik erfolgen. Durch die Silanisierung bzw. Oberflächenmodifikation kann der Leichtfüllstoff besser in das resultierende Bindemittelsystem eingebunden werden

In einer bevorzugten Ausführungsform enthält die Zusammensetzung als Leichtfüllstoff 1 bis 35 Gew.-%, insbesondere 2 bis 25 Gew.-%, bevorzugt 3 bis 20 Gew.-%, jeweils bezogen auf die gesamte Zusammensetzung, mindestens eines geblähten Partikels mindestens eines glasreichen vulkanischen Gesteins mit einer geschlossenen Außenschale, vorzugsweise mindestens eines geblähten Perlits mit einer geschlossenen Außenschale.

Neben den oben genannten Bestandteilen können die thermisch expandierbaren Massen noch weitere übliche Komponenten, wie beispielsweise Füllstoffe, Weichmacher, Reaktivverdünner, Rheologie-Hilfsmittel, Netzmittel, Haftvermittler, Alterungsschutzmittel, Stabilisatoren und/oder Farbpigmente enthalten.

So ist es bevorzugt, wenn die erfindungsgemäßen Zusammensetzungen weiterhin mindestens ein Antioxidans enthalten.

Obwohl prinzipiell die herkömmlichen synthetischen Antioxidantien, wie beispielsweise sterische gehinderte Phenole oder Aminderivate, erfindungsgemäß geeignet sind, hat es sich als besonders vorteilhaft im Sinne der Erfindung erwiesen, wenn ein natürliches Antioxidans verwendet wird.

Beispiele für erfindungsgemäß bevorzugte synthetische Antioxidantien sind die unter der Handelsbezeichnung Wingstay^{®} im Handel erhältlichen Produkte sowie das 2,2 Methylen-bis-(4 Methyl-6-tert.-Butylphenol) und das 2,6-Ditert.butyl-p-kresol (3,5-Di-tert-butyl-4-hydroxytoluol)

Erfindungsgemäß wird unter einem natürlichen Antioxidans eine Verbindung verstanden, die aus natürlich nachwachsenden Rohstoffen gewonnen werden kann. Es ist besonders bevorzugt, wenn Verbindungen als natürliche Antioxidantien eingesetzt werden, die unmittelbar, dass heißt ohne chemische Modifikation, aus natürlichen Rohstoffen hervorgehen. Erfindungsgemäß bevorzugte Beispiele für diese Stoffgruppe sind Tocopherol, Squalen und Sesamolin. Tocopherol ist erfindungsgemäß ganz besonders bevorzugt.

Die Antioxidantien, insbesondere die natürlichen Antioxidantien, werden in den erfindungsgemäßen Zusammensetzugen vorzugsweise in Mengen von 0,1 bis 5 Gew.-%, insbesondere von 0,2 bis 3 Gew.-%, jeweils bezogen auf die gesamte Zusammensetzung, eingesetzt.

In einer weiteren Ausführungsform ist es bevorzugt, wenn die erfindungsgemäßen Zusammensetzungen weiterhin mindestens einen anorganischen Füllstoff enthalten.

Als erste Gruppe anorganischer Füllstoffe kommen beispielsweise die diversen gemahlenen oder gefällten Kreiden, Calcium-Magnesiumcarbonate, Calciumoxid, Schwerspat sowie insbesondere silikatische Füllstoffe vom Typ des Aluminium-Magnesium-Calcium-Silicats, beispielsweise Wollastonit oder Chlorit, oder Alumunium-Borosilikatgläser in Frage. Kreiden sind erfindungsgemäß bevorzugte anorganische Füllstoffe; ganz besonders bevorzugt sind gemahlene mineralische Kreiden. Weiterhin ist Calciumoxid ein besonders bevorzugter anorganischer Füllstoff im Sinne der vorliegenden Erfindung. Der Gehalt an Calciumcarbonat und/oder Calciumoxid, insbesondere Calciumoxid, kann vorzugsweise zwischen 5 Gew.-% bis etwa 50 Gew.-% bezogen auf die gesamte Zusammensetzung variieren. Bei Calciumoxid sind Konzentrationen von 0 und etwa 10 Gew.-%, insbesondere 2 bis 10 Gew.-%, bezogen auf die gesamte Zusammensetzung bevorzugt.

Es kann unter Umständen zweckmäßig sein, dass zumindest ein Teil der anorganischen Füllstoffe Oberflächen-vorbehandelt ist; insbesondere hat sich bei den verschiedenen Calciumcarbonaten und Kreiden eine Beschichtung mit mindestens einer Fettsäure, insbesondere mit Stearinsäure, als zweckmäßig erwiesen.

Eine zweite Gruppe anorganischer Füllstoffe, die in den erfindungsgemäßen heiß-härtenden Zubereitungen eingesetzt werden können, sind die blättchenförmigen Füllstoffe.

Besonders bevorzugt sind heiß-härtende Zubereitungen, die mindestens einen blättchenförmigen Füllstoff, wie beispielsweise Graphit, Vermiculit, Glimmer, Talk oder ähnliche Schichtsilikate enthalten. Graphit ist ein besonders bevorzugter blättchenförmiger Füllstoff im Sinne der vorliegenden Erfindung. Die blättchenförmigen Füllstoffe werden vorzugsweise eingesetzt, wenn ein positiver Einfluss auf die akustischen Eigenschaften gewünscht ist.

Der Gehalt an blättchenförmigen Füllstoffen kann vorzugsweise zwischen 2 Gew.-% bis zu 15 Gew.-% betragen.

Eine dritte Gruppe erfindungsgemäß bevorzugter anorganischer Füllstoffe sind die Rheologieadditive, die einen Einfluß auf die Rheologie und/oder Festigkeit der Zubereitungen haben können. Erfindungsgemäß werden die Rheologieadditive vorzugsweise ausgewählt aus Siliziumdioxid und/oder Ruß.

Der Begriff "Siliziumdioxid" umfasst erfindungsgemäß auch die als "Kieselsäure" oder angelsächsisch als "silica" bezeichneten Oxidformen des Siliciums.

Es kann erfindungsgemäß bevorzugt sein, wenn die Zubereitungen mindestens ein oberflächenmodifiziertes Siliziumdioxid enthalten; besonders vorteilhafte Eigenschaften als oberflächenmodifiziertes Siliziumdioxid weisen hydrophil modifizierte Siliziumdioxide auf.

Besonders bevorzugt sind erfindungsgemäß oberflächenmodifizierte Siliziumdioxidtypen mit einer spezifischen Oberfläche von mindestens 100m2/g, insbesondere von mindestens 150m2/g (jeweils gemessen nach der BET-Methode).

Unter Ruß wird erfindungsgemäß vorzugsweise industriell hergestellter Ruß verstanden, der im Englischen auch als "Carbon Black" bezeichnet wird.

Ein Gehalt von 0 bis 5Gew.-%, insbesondere 0,1 bis 4Gew.-%, ganz besonders 0,5 bis 3Gew.-% eines Rheologieadditives, vorzugsweise ausgewählt aus Siliziumdioxid und/oder Ruß, bezogen auf die gesamte heiß-härtbare Zubereitung ist besonders bevorzugt.

Es ist erfindungsgemäß bevorzugt, wenn Zusammensetzungen eine Kombination aus zwei oder mehr anorganischen Füllstoffen enthält. Insbesondere eine Kombination aus mindestens einem anorganischen Füllstoff ausgewählt aus Calciumcarbonat und/oder Calciumoxid und mindestens einem blättchenförmigen anorganischen Füllstoff und/oder mindestens einem Rheologieadditiv ist erfindungsgemäß besonders bevorzugt.

Eine Kombination aus
- mindestens einem anorganischen Füllstoff ausgewählt aus Calciumcarbonat und/oder Calciumoxid,
- mindestens einem blättchenförmigen anorganischen Füllstoff und
- mindestens einem Rheologieadditiv
ist erfindungsgemäß besonders ganz bevorzugt.

Die anorganischen Füllstoffe werden vorzugsweise in einer Menge von 10 bis 70 Gew.-%, insbesondere von 30 bis 60 Gew.-%, jeweils bezogen auf die Masse der Zusammensetzung eingesetzt.

Neben den verschiedenen anorganischen Füllstoffen und den Leichtfüllstoffen können die erfindungsgemäßen Zusammensetzungen weiterhin Fasern enthalten. Erfindungsgemäß bevorzugte Fasern werden ausgewählt aus Kohlefasern, Aramidfasern, Glasfasern, Siliciumnitridfasern, Metallfasern, Keramikfasern, Borfasern, Basaltfasern, Polyethylenfasern, Polypropylenfasern, Polyesterfasern und/oder Naturfasern, wobei als Naturfasern Flachs- und Sisalfasern besonders bevorzugt sind.

Die Fasern sind in den heiß-härtenden Zubereitungen vorzugsweise in einer Menge von 0 bis 6 Gew.-%, insbesondere von 0,5 bis 5 Gew.-%, jeweils bezogen auf die gesamte Zusammensetzung, enthalten.

Die erfindungsgemäßen Zusammensetzungen zeichnen sich vorzugsweise dadurch aus, dass sie reversibel (ohne eine nennenswerte Änderung des Temperatur-abhängigen Viskositätsverhaltens) auf Temperaturen bis zu 70°C erwärmt werden können und folglich mehrfach innerhalb dieses Temperaturbereichs mittels beheizter Pumpen transportiert und/oder umgeformt werden können.

In jedem Fall sind die erfindungsgemäßen Zusammensetzungen bei Temperaturen unterhalb von 70 °C pumpbar. Unter "bei Temperaturen unterhalb von 70°C pumpbaren Zusammensetzungen" werden erfindungsgemäß Zusammensetzungen verstanden, die bei Temperaturen unterhalb von 70°C mit herkömmlichen Pumpen mit einem Druck von weniger als 250bar, insbesondere weniger als 200bar, ganz besonders von 6 bis 180bar, aus einem Vorratsgefäß auf den Ort der Anwendung appliziert werden könnten. Zusammensetzungen, die bei Applikationstemperaturen im Bereich von 40 bis 60°C mit herkömmlichen Pumpen mit einem Druck von weniger als 250bar, insbesondere weniger als 200bar, ganz besonders von 6 bis 180bar, aus einem Vorratsgefäß auf den Ort der Anwendung appliziert werden könnten, sind besonders bevorzugt. Besonders bevorzugt weisen die Zusammensetzungen eine Viskosität bei 25°C von 0,1 bis 500 Pas, insbesondere von 1 bis 250 Pas, vorzugsweise von 5 bis 100 Pas. Ganz besonders bevorzugt weisen die Zusammensetzungen eine Viskosität bei 50°C von 0,1 bis 500 Pas, insbesondere von 1 bis 250 Pas, vorzugsweise von 5 bis 100 Pas.

Soweit nicht anders vermerkt werden die Viskositäten im Rahmen der vorliegenden Anmeldung unter den folgenden Messbedingungen bestimmt: Rotationsrheometer mit Platte-Platte-Geometrie (PP20), gemessen in Oszillation bei 10% Deformation und einer Frequenz von 100 rad/s, Schichtdicke des Materials 0,2mm.

Ganz besonders bevorzugt ist für die erfindungsgemäß Zusammensetzungen, die "bei Temperaturen unterhalb von 70°C pumpbar" sind, dass sie bei 60°C und einem Pumpendruck von 6 bar einen Fluss von mindestens 100g/min, vorzugsweise von 150g/min bis 4500g/min, ganz bevorzugt von 250g/min bis 3000g/min aufweisen, wenn sie aus einer vollständig gefüllten, handelsüblichen Aluminiumdüsenkartusche mit einem Fassungsvolumen von 310ml und einem Innendurchmesser von 46mm, deren Austrittsöffnung mit Hilfe eines Kartuschenanstechers mit einem Außendurchmesser von 9mm geöffnet wurde, ohne Aufsatz einer Düse bei einer Temperatur von 60°C (nach 45Minuten Vortemperierung) und einem Druck von 6bar ausgebracht werden. Der Fluss gibt die Masse an Zubereitung an, die innerhalb von 1 Minute ausgebracht werden kann und wird dementsprechend in g/min angegeben.

Bevorzugt beträgt die Dichte der Zusammensetzung max. 2 g/cm³, vorzugsweise 0,9 bis 1,5 g/cm³ und weiterhin vorzugsweise 1 bis 1,2 g/cm³.

In einer bevorzugten Ausführungsform enthält die Zusammensetzung
(a) 2 bis 65 Gew.-% mindestens eines reaktiven Bindemittels, insbesondere ausgewählt aus aus der Gruppe von Epoxiden, Kautschuken, peroxidisch vernetzbaren Polymeren oder Triglyceridfraktionen mit ungesättigten Fettsäuren;
(b) 0,25 bis 15 Gew.-% mindestens eines Härters und/oder Beschleunigers,
(c) 0,1 bis 15 Gew.-% mindestens eines thermisch aktivierbaren Treibmittels, insbesondere eines chemischen Treibmittels; und
(d) 1 bis 35 Gew.-% mindestens eines Leichtfüllstoffs, wobei als Leichtfüllstoff mindestens ein geblähtes Partikel mindestens eines glasreichen vulkanischen Gesteins mit einer geschlossenen Außenschale enthalten ist, insbesondere eines Perlit-Partikels.

Die Gew.-%-Angaben beziehen sich, soweit nichts anders angegeben wurde, jeweils auf die gesamte Klebstoffzusammensetzung.

In einer bevorzugten Ausführungsform enthält die Zusammensetzung
(a) 5-50 Gew.-% mindestens eines Polyens, insbesondere eines flüssigen Polyens mit vorzugsweise einem Molekulargewicht Mw unter 20000;
(b) 0,25 bis 15 Gew.-% eines Vulkanisationssystems bestehend aus Schwefel und einem oder mehreren organischen Beschleuniger(n) und /oder Metalloxid(en),
(c) 0,1 bis 15 Gew.-% mindestens eines thermisch aktivierbaren Treibmittels, insbesondere eines chemischen Treibmittels; und
(d) 1 bis 35 Gew.-% mindestens eines Leichtfüllstoffs, wobei als Leichtfüllstoff mindestens ein geblähtes Partikel mindestens eines glasreichen vulkanischen Gesteins mit einer geschlossenen Außenschale enthalten ist, insbesondere eines Perlit-Partikels.

In einer weiter bevorzugten Ausführungsform enthält die die Zusammensetzung
(a) 5-50 Gew.-% mindestens einer Triglyceridfraktion, deren Fettsäurenverteilung einen Anteil von mindestens 5Gew.-%, insbesondere von mindestens 60Gew.-%, einer oder mehrerer Ω-3-Fettsäure(n) und/oder einer oder mehrerer Ω-6-Fettsäure(n) aufweist, insbesondere Leinöl;
   optional 5-50 Gew.-% mindestens eines synthetischen Polymers, das mindestens eine C=C-Doppelbindung und/oder mindestens eine CΞC-Dreifachbindung aufweist, insbesondere eines flüssigen Polybutadiens
(b) 0,1 bis 15 Gew.-% eines Vulkanisationssystems mindestens ein Vulkanisationsmittel ausgewählt aus der Gruppe, bestehend aus
   - Schwefel,
   - peroxidischen Vulkanisationsmitteln,
   - Chinonen und/oder Chinondioximen und/oder
   - Dinitrosobenzolen;

(a) 0,1 bis 15 Gew.-% mindestens eines thermisch aktivierbaren Treibmittels, insbesondere eines chemischen Treibmittels; und
(b) 1 bis 35 Gew.-% mindestens eines Leichtfüllstoffs, wobei als Leichtfüllstoff mindestens ein geblähtes Partikel mindestens eines glasreichen vulkanischen Gesteins mit einer geschlossenen Außenschale enthalten ist, insbesondere eines Perlit-Partikels.

Diese bevorzugten Zusammensetzungen enthalten vorzugsweise alle anderen oben genannten anderen Bestandteile alleine oder in Kombination in den entsprechend bevorzugten Mengen.

Die erfindungsgemäßen Zusammensetzungen können durch Mischung der ausgewählten Komponenten in einem beliebigen, geeigneten Mischer, wie beispielsweise einem Dispersionsmischer, einem Planetenmischen, einem Doppelschneckenmischer, einem kontinuierlichen Mischer oder einem Extruder, insbesondere einem Doppelschneckenextruder, hergestellt werden.

Obwohl es vorteilhaft sein kann, die Komponenten etwas zu erhitzen, um die Erreichung einer homogenen, einheitlichen Masse zu erleichtern, muss dafür Sorge getragen werden, dass keine Temperaturen erreicht werden, die eine Aktivierung des thermisch aktivierbaren Härters und/oder des thermisch aktivierbaren Treibmittels bewirken.

Die Lagerung der erfindungsgemäßen Zusammensetzungen bis zur Anwendung erfolgt vorzugsweise in Düsenkartuschen oder Fässern, wie beispielsweise Hobbocks.

Zum Zeitpunkt der Anwendung wird die erfindungsgemäße Zusammensetzung mit herkömmlichen, beheizten Pumpen aus dem Lagerbehältnis zum Ort der Anwendung transportiert und dort appliziert. Ein Auftrag bis zu einer Schichtdicke von 5cm ist dabei problemlos möglich, so dass auch größere Hohlräume, beispielsweise Rohre mit einem entsprechenden Innendurchmesser, ohne weiteres gefüllt werden können.

Die Expansion der applizierten Zusammensetzung erfolgt durch Erhitzung, wobei die Zubereitung für eine bestimmte Zeit auf eine bestimmte Temperatur erhitzt wird, die ausreichend ist, um die Aktivierung des Treibmittel sowie des Härters zu bewirken.

In Abhängigkeit von der Zusammensetzung der Zubereitung und den Bedingungen der Fertigungslinie liegen derartige Temperaturen üblicherweise im Bereich von 130°C bis 240°C, vorzugsweise 150°C bis 200°C, mit einer Verweilzeit von 10 bis 90 Minuten, vorzugsweise von 15 bis 60 Minuten.

Die Art der Wärmequelle spielt prinzipiell keine Rolle, so kann die Wärmezufuhr beispielsweise durch ein Heißluftgebläse, durch Bestrahlung mit Mikrowellen, durch magnetische Induktion oder auch durch Heizzangen erfolgen. Im Bereich des Fahrzeugbaus sowie in Technologiefeldern mit verwandten Herstellprozessen ist es besonders vorteilhaft, wenn die Expansion der erfindungsgemäßen Zubereitungen während der Passage des Bauteils beziehungsweise des Fahrzeugs durch den Ofen zur Aushärtung der kathodischen Tauchlackierung oder zum Einbrennen der Pulverlackbeschichtungen erfolgt, so dass auf einen separaten Erhitzungsschritt verzichtet werden kann.

Erfindungsgemäß können solche Zusammensetzungen bevorzugt sein, die eine Härtungsexothermie von weniger als 300J/g, insbesondere weniger als 250J/g, ganz besonders weniger als 220J/g aufweisen. Die Härtungsexothermie wird erfindungsgemäß mittels DSC-Messung in einem Temperaturbereich von 25°C bis 250°C mit einer Heizrate von 5K/min bestimmt.

Ein weiterer Gegenstand der Erfindung ist ein Verfahren zum Versteifen und/oder Verstärken von rohrförmigen Strukturen, wobei die oben genannte Zusammensetzung bei einer Temperatur unterhalb von 70°C auf die Oberfläche der zu verstärkenden Struktur, insbesondere mit einem Pumpendruck von größer 3 bar aufgebracht wird, und diese Zusammensetzung zu einem späteren Zeitpunkt bei Temperaturen oberhalb von 130°C ausgehärtet wird..

Ein Aufbringen der Zusammensetzung in einem Temperaturbereich von 40°C bis 60°C ist dabei erfindungsgemäß besonders bevorzugt.

Weiterhin besonders bevorzugt ist eine Applikation bei einem Applikationsdruck von 6bar bis 180bar.

Die eigentliche Härtung findet erfindungsgemäß zu einem "späteren Zeitpunkt" statt. So ist es beispielsweise erfindungsgemäß denkbar, dass die zu versteifenden Bauteile mit der erfindungsgemäßen Zusammensetzung beschichtet und anschließend zwischengelagert werden. Dabei kann die Zwischenlagerung beispielsweise auch den Transport zu einem anderen Werk umfassen. Eine derartige Zwischenlagerung kann bis zu einigen Wochen dauern.

In einer anderen Ausführungsform ist es aber auch denkbar, dass die zu versteifenden Bauteile kurz nach der Beschichtung mit der erfindungsgemäßen Zusammensetzung einem Härtungsschritt unterzogen werden. Dies kann unmittelbar oder bei einer Fließbandproduktion nach Erreichen einer der folgenden Stationen erfolgen. Es ist im Rahmen dieser Ausführungsform erfindungsgemäß besonders bevorzugt, wenn der Aushärtungsschritt innerhalb von 24h, insbesondere innerhalb von 3h, nach dem Auftrag der erfindungsgemäßen Zusammensetzung erfolgt.

Die erfindungsgemäßen Zusammensetzungen können in allen Produkten zum Einsatz kommen, die Hohlräume oder zu verstärkende Rohrkonstruktionen aufweisen. Dies sind neben den Fahrzeugen beispielsweise Flugzeuge, Haushaltsgeräte, Möbel, Gebäude, Wände, Abtrennungen, oder Boote sowie alle Vorrichtungen, die eine tragende Rahmenkonstruktion aus Rohren aufweisen, wie beispielsweise Sportgeräte, Mobilitätshilfsmittel, Gestelle und Fahrräder.

Beispiele für Sportgeräte, bei denen die vorliegende Erfindung vorteilhaft verwendet werden kann, sind Fahrräder, Angelnetze, Angelruten, Torpfosten, Tennisnetzpfosten sowie Basketballkorbkonstruktionen.

Unter dem Begriff "Fahrrad" sind erfindungsgemäß alle zumeist zweirädrigen, einspurigen Fahrzeuge zu verstehen, die durch das Treten von Pedalen angetrieben werden.

Neben den herkömmlichen Fahrradkonstruktionen, bei denen der Fahrer eine sitzende Position einnimmt, sollen erfindungsgemäß beispielsweise auch Liegeräder mit umfasst sein. Neben den herkömmlichen festen Rahmen sind auch Konstruktionen mit Gelenken, wie beispielsweise Falträder erfindungsgemäß umfasst. Zudem sollen auch drei- oder mehrrädrige Fahrzeuge mit umfasst sein.

Weiterhin können die erfindungsgemäßen Zubereitungen eingesetzt werden, um die Rahmenkonstruktionen von Mobilitätshilfsmittel, wie beispielsweise Rollstühle, Rollatoren, Gehstützen, Krankenstöcken oder Gehböcken, zu verstärken.

Im Bereich des Fahrzeugbaus hat sich der Einsatz der erfindungsgemäßen Zubereitungen insbesondere im Bereich der Konstruktion des Fahrersicherheitskäfigs beziehungsweise der Fahrgastzelle als vorteilhaft erwiesen, da dadurch der Konstruktion eine enorme Stabilität bei gleichzeitig geringem Gewicht verliehen werden kann. Insbesondere bei der Konstruktion von Rennwagen aller Klassen (Formel I, Tourenwagen, Rallye-Fahrzeugen etc.) kann die erfindungsgemäße Zubereitung vorteilhaft eingesetzt werden.

Ein weiteres bevorzugtes Anwendungsgebiet der vorliegenden Erfindung ist der Bereich der Werkzeuge. Hinsichtlich der Art der Werkzeuge bestehen keine prinzipiellen Beschränkungen. So kann es sich beispielsweise um Handwerkergeräte, Fachwerkzeuge, Gartengeräte, wie beispielsweise Spaten oder Schubkarren, oder auch Küchengeräte handeln. Allen diesen Bauteilen ist gemeinsam, dass die erfindungsgemäße Zubereitung eine Stabilisierung der Konstruktion ermöglicht, ohne dabei das Gesamtgewicht wesentlich zu erhöhen.

Weiterhin können die erfindungsgemäßen Zusammensetzungen vorteilhaft zur Stabilisierung von Rahmen eingesetzt werden. Unter "Rahmen" werden erfindungsgemäß seitlichen Einfassungen, wie beispielsweise Bilderrahmen, Fensterrahmen oder auch Türrahmen verstanden.

Ein weiteres Anwendungsgebiet ist die Verstärkung von Gestellen aller Arten. Auch in diesem Anwendungsgebiet steht die hohe Stabilität der entsprechend verstärkten Konstruktionen im Vordergrund. Zu den Gestellen, bei denen die erfindungsgemäße Zubereitung eingesetzt werden kann, zählen beispielsweise Leitern jeder Art, aber auch Baustellengerüste, Gerüste für den Messebau, Konstruktionen für Konzertbühnen wie beispielsweise als Traversen eingesetzte Trage- und Aufbaukonstruktionen sowie Lichtmasten für Stadien oder Zuschauertribünen.

Ein weiteres umfassendes Anwendungsgebiet ist der Bereich der Straßenausstattung. In diesen Bereich fallen neben Ampel- und Lichtanlagen auch alle weiteren Konstruktionen, wie beispielsweise Wartehäuser, Bahnsteiggeländer, Sitzkonstruktionen, Straßenschilder, Fahrradständer oder auch Leitplanken.

Bezüglich der weiteren Details dieses Gegenstandes der vorliegenden Erfindung gilt mutatis mutandis das zu dem ersten Gegenstand bereits Gesagte.

Ein dritter Gegenstand der vorliegenden Erfindung ist die Verwendung von einer erfindungsgemäßen Zusammensetzung zur Versteifung und/oder Verstärkung von rohrförmigen Strukturen.

Bezüglich der Details dieses Gegenstandes der vorliegenden Erfindung gilt mutatis mutandis das zu den anderen Gegenständen bereits Gesagte.

Ein vierter Gegenstand der vorliegenden Erfindung ist ein Bauteil mit dünnwandiger Struktur, das mit einer erfindungsgemäßen Zusammensetzung nach Aushärtung versteift und/oder verstärkt wurde.

Auch bei diesem Gegenstand der Erfindung gilt bezüglich der Details mutatis mutandis das zu den anderen Gegenständen bereits Gesagte.

Im Folgenden wir die Erfindung durch Beispiele illustriert, ohne aber auf diese beschränkt zu sein.

### Beispiele

### Durchführung:

Die Zusammensetzungen wurden entsprechen der Tabelle 1 zusammengemischt. Anschließend wurde die Dichte der Zusammensetzung und die Viskosität bei 40 °C bestimmt. Zum Testen der Eigenschaften für die Verstärkung von Hohlkörpern wurde, die Zusammensetzung bei 160 °C für 20 Minuten geschäumt und gleichzeitig gehärtet.

| **Zusammensetzung** | **1** | **2** | **3** | **4** |
|---|---|---|---|---|
| Calciumoxid | 2 | 2 | 2 | 2 |
| Antioxidant | 0,25 | 0,25 | 0,25 | 0,25 |
| Präzipitiertes CaCO3 | 14 | 14 | 14 | 14 |
| gemahlenes CaCO3 | 17,1 | 20,85 | 15,1 | 7,1 |
| Schwefel | 10 | 10 | 10 | 10 |
| Polybutadien A | 9 | 9 | 9 | 9 |
| Polybutadien B (funktionalisiert) | 2 | 2 | 2 | 2 |
| Leinöl | 24 | 24 | 24 | 24 |
| Graphit | 14 | 14 | 14 | 14 |
| Vulkanisationsbeschleuniger A (Mercapto-Klasse) | 1 | 1 | 1 | 1 |
| **Glashohlkugeln** | **4** | **0** | **0** | **0** |
| **Polymerballons** | **0** | **0,25** | **0** | **0** |
| **Perlit Micro-Hohlkugeln mit geschlossener Außenschale** | **0** | **0** | **6** | **14** |
| Pyrogene Kieselsäure | 1,5 | 1,5 | 1,5 | 1,5 |
| Treibmittel | 0,15 | 0,15 | 0,15 | 0,15 |
| Vulkanisationsbeschleuniger B (Dithiocarbamat-Klasse) | 0,9 | 0,9 | 0,9 | 0,9 |
| Additive | 0,1 | 0,1 | 0,1 | 0,1 |
| | 100,00 | 100,00 | 100,00 | 100,00 |
| | | | | |
| Dichte [g/cm³] | 1,31 | 1,29 | 1,31 | 1,12 |
| Shore A Härte [SKT] | 82 | 81 | 83 | 84 |
| Stabilität gegen Druck | Bis 360 bar | Nicht stabil | Bis 360 bar | Bis 360 bar |
| Viskosität bei 40°C [Pa*s] | 6,7 | 7,0 | 6,9 | 11,0 |
| ungefähre Kosten [€/kg] | 1,42 | 1,29 | 1,32 | 1,39 |

Die erfindungsgemäßen Zusammensetzungen 3 und 4 mit den geblähten Perlit-Partikeln mit geschlossener Außenschale sind sowohl leicht zu handhaben, und können ohne einen Schaden am Leichtfüllstoff bei Drücken von bis zu 360 Bar gepumpt werden. Diese Partikel nehmen aufgrund ihrer geschlossenen Außenschale und Druckstabilität keine Bestandteile der Zusammensetzung und auch kein Wasser auf, so dass der gewichtsreduzierende Effekt erhalten bleibt und die anderen mechanischen Eigenschaften nicht negativ beeinflusst werden. So zeigen diese Zusammensetzungen auch einen hervorragende Haftung und eine besonders glatte Oberfläche des geschäumten Produkts. Zudem weisen diese Zusammensetzungen eine besonders hohe Festigkeit auf.

## Patentansprüche

1. Zusammensetzung umfassend
(a) mindestens ein reaktives Bindemittel;
(b) mindestens einen Härter und/oder Beschleuniger,
(c) mindestens ein thermisch aktivierbares Treibmittel und
(d) mindestens einen Leichtfüllstoff, wobei als Leichtfüllstoff mindestens ein geblähtes Partikel mindestens eines glasreichen vulkanischen Gesteins mit einer geschlossenen Außenschale enthalten ist
wobei die Zusammensetzung bei Temperaturen unterhalb von 70 °C pumpbar ist.

2. Zusammensetzung nach Anspruch 1, **dadurch gekennzeichnet, dass** das mindestens eine reaktive Bindemittel ausgewählt ist aus der Gruppe von Epoxiden, Kautschuken, peroxidisch vernetzbaren Polymeren oder Triglyceridfraktionen mit ungesättigten Fettsäuren.

3. Zusammensetzung nach Anspruch 1 oder 2, **dadurch gekennzeichnet, dass** als reaktives Bindemittel 5-50 Gew.-% mindestens eines Polyens, insbesondere eines flüssigen Polyens, bevorzugt Polybutadien mit vorzugsweise einem Molekulargewicht Mw, gemessen mittels GPC gegen einen Polystyrolstandard, unter 20000 enthalten ist.

4. Zusammensetzung nach einem der Ansprüche 1 bis 3, **dadurch gekennzeichnet, dass** als reaktives Bindemittel 5-50 Gew.-% mindestens einer Triglyceridfraktion enthalten ist, deren Fettsäurenverteilung einen Anteil von mindestens 5 Gew.-%, insbesondere von mindestens 60 Gew.-%, einer oder mehrerer Ω-3-Fettsäure(n) und/oder einer oder mehrerer Ω-6-Fettsäure(n) aufweist, insbesondere Leinöl.

5. Zusammensetzung nach einem der Ansprüche 1 bis 4, **dadurch gekennzeichnet, dass** 0,25 bis 15 Gew.-% mindestens eines Härters und/oder Beschleunigers, insbesondere Schwefel, enthalten ist.

6. Zusammensetzung nach einem der Ansprüche 1 bis 5, **dadurch gekennzeichnet, dass** 0,1 bis 15 Gew.-% mindestens eines thermisch aktivierbaren Treibmittels enthalten sind.

7. Zusammensetzung nach einem der Ansprüche 1 bis 6, **dadurch gekennzeichnet, dass** 1 bis 35 Gew.-% mindestens eines geblähten Partikels mindestens eines glasreichen vulkanischen Gesteins mit einer geschlossenen Außenschale, vorzugsweise mindestens eines geblähten Perlits mit einer geschlossenen Außenschale, enthalten ist.

8. Zusammensetzung nach einem der Ansprüche 1 bis 7, **dadurch gekennzeichnet, dass** die geblähten Partikel mindestens eines glasreichen vulkanischen Gesteins mit einer geschlossenen Außenschale eine maximale Korngröße, bestimmbar mittels Siebanalyse, wobei ein Sieb mit der entsprechenden Maschengröße alle Partikel hindurch lässt, von keiner 1000 µm, insbesondere kleiner 750 µm, bevorzugt kleiner 500 µm, besonders bevorzugt kleiner 400 µm haben und/oder eine gewichtsmittlere Korngröße d50, bestimmbar mittels Siebanalyse, von kleiner 500 µm, insbesondere von 10 bis 500 µm, insbesondere von 20 bis 200 µm, vorzugsweise von 30 bis 125 µm aufweisen.

9. Zusammensetzung nach einem der Ansprüche 1 bis 8, **dadurch gekennzeichnet, dass** die geblähten Partikel als Leichtfüllstoff ein Schüttgewicht von kleiner 500 kg/m³, insbesondere von 10 bis 500 kg/m³, vorzugsweise von 100 bis 400 kg/m³, bevorzugt von 200 bis 270 kg/m³ aufweisen.

10. Verfahren zum Versteifen und/oder Verstärken von rohrförmigen Strukturen, wobei eine Zusammensetzung gemäß einem der Ansprüche 1 bis 9 bei einer Temperatur unterhalb von 70°C auf die Oberfläche der zu verstärkenden Struktur, insbesondere mit einem Pumpendruck von größer 3 bar, aufgebracht wird und diese Zusammensetzung zu einem späteren Zeitpunkt bei Temperaturen oberhalb von 130°C ausgehärtet wird.

11. Verfahren zum Versteifen und/oder Verstärken nach Anspruch 10, **dadurch gekennzeichnet, dass** die Zusammensetzung in einem Temperaturbereich von 40°C bis 60°C aufgebracht wird.

12. Verfahren zum Versteifen und/oder Verstärken nach Anspruch 10 oder 11, **dadurch gekennzeichnet, dass** die Applikation der Zusammensetzung bei einem Applikationsdruck von 6bar bis 180bar erfolgt.

13. Bauteil versteift und/oder verstärkt unter zur Hilfenahme einer Zusammensetzung gemäß einem der Ansprüche 1 bis 9 oder hergestellt gemäß einem Verfahren der Ansprüche 10 bis 12.

14. Verwendung einer Zusammensetzung gemäß einem der Ansprüche 1 bis 9 zum Versteifen und/oder Verstärken von rohrförmigen Strukturen.

## Claims

1. A composition comprising:
(a) at least one reactive binder;
(b) at least one curing agent and/or accelerator,
(c) at least one thermally activatable blowing agent; and
(d) at least one lightweight filler, wherein at least one expanded particle of at least one glass-rich volcanic rock having a closed outer shell is contained as the lightweight filler
wherein the composition can be pumped at temperatures below 70 °C.

2. The composition according to claim 1, **characterized in that** the at least one reactive binder is selected from the group of epoxides, rubbers, peroxidically crosslinkable polymers or triglyceride fractions comprising unsaturated fatty acids.

3. The composition according to either claim 1 or claim 2,
**characterized in that** 5-50 wt.% of at least one polyene, in particular a liquid polyene, preferably polybutadiene, preferably having a molecular weight Mw below 20,000, measured by means of GPC against a polystyrene standard, is contained as the reactive binder.

4. The composition according to one of claims 1 to 3, **characterized in that** 5-50 wt.% of at least one triglyceride fraction of which the fatty acid distribution has a proportion of at least 5 wt.%, in particular at least 60 wt.%, of one or more Ω-3 fatty acids and/or one or more Ω-6 fatty acids, in particular linseed oil, is contained as the reactive binder.

5. The composition according to one of claims 1 to 4, **characterized in that** from 0.25 to 15 wt.% of at least one curing agent and/or accelerator, in particular sulfur, is contained.

6. The composition according to one of claims 1 to 5, **characterized in that** from 0.1 to 15 wt.% of at least one thermally activatable blowing agent is contained.

7. The composition according to one of claims 1 to 6, **characterized in that** from 1 to 35 wt.% of at least one expanded particle of at least one glass-rich volcanic rock having a closed outer shell, preferably at least one expanded perlite having a closed outer shell, is contained.

8. The composition according to one of claims 1 to 7, **characterized in that** the expanded particles of at least one glass-rich volcanic rock having a closed outer shell have a maximum particle size of less than 1,000 µm, in particular less than 750 µm, preferably less than 500 µm, particularly preferably less than 400 µm, determinable by means of sieve analysis, a sieve having the corresponding mesh size allowing all particles to pass through, and/or have a weight-average particle size d50 of less than 500 µm, in particular from 10 to 500 µm, in particular from 20 to 200 µm, preferably from 30 to 125 µm, determinable by means of sieve analysis.

9. The composition according to one of claims 1 to 8, **characterized in that** the expanded particles, acting as a lightweight filler, have a bulk density of less than 500 kg/m³, in particular from 10 to 500 kg/m³, preferably from 100 to 400 kg/m³, more preferably from 200 to 270 kg/m³.

10. A method for stiffening and/or reinforcing tubular structures, wherein a composition according to any of claims 1 to 9 is applied to the surface of the structure to be reinforced at a temperature below 70 °C, in particular at a pump pressure of greater than 3 bar, and said composition is cured at a later point in time at temperatures above 130 °C.

11. The stiffening and/or reinforcing method according to claim 10, **characterized in that** the composition is applied in a temperature range of from 40 °C to 60 °C.

12. The stiffening and/or reinforcing method according to claim 10 or 11, **characterized in that** the composition is applied at an application pressure of from 6 bar to 180 bar.

13. A component stiffened and/or reinforced using a composition according to any of claims 1 to 9 or produced according to a method from claims 10 to 12.

14. The use of a composition according to one of claims 1 to 9 for stiffening and/or reinforcing tubular structures.

## Revendications

1. Composition comprenant
(a) au moins un liant réactif ;
(b) au moins un durcisseur et/ou accélérateur,
(c) au moins un agent propulseur pouvant être activé thermiquement et
(d) au moins une charge légère, au moins une particule expansée d'au moins une roche volcanique riche en verre comportant une coquille externe fermée étant contenue comme charge légère
la composition pouvant être pompée à des températures inférieures à 70 °C.

2. Composition selon la revendication 1, **caractérisée en ce que** l'au moins un liant réactif est choisi dans le groupe constitué par les époxydes, les caoutchoucs, les polymères pouvant être réticulés par un peroxyde ou les fractions de triglycérides comportant des acides gras insaturés.

3. Composition selon la revendication 1 ou 2, **caractérisée en ce qu'**elle contient comme liant réactif 5 à 50 % en poids d'au moins un polyène, en particulier d'un polyène liquide, de préférence le polybutadiène comportant préférablement une masse moléculaire Mw, mesurée par CPG par rapport à un témoin de polystyrène, inférieure à 20 000.

4. Composition selon l'une des revendications 1 à 3,
**caractérisée en ce qu'**elle contient comme liant réactif 5 à 50 % en poids d'au moins une fraction de triglycérides, dont la répartition des acides gras présente une proportion d'au moins 5 % en poids, en particulier d'au moins 60 % en poids, d'un ou de plusieurs acides gras Ω-3 et/ou d'un ou de plusieurs acides gras Ω-6, en particulier l'huile de lin.

5. Composition selon l'une des revendications 1 à 4,
**caractérisée en ce qu'**elle contient 0,25 à 15 % en poids d'au moins un durcisseur et/ou accélérateur, en particulier le soufre.

6. Composition selon l'une des revendications 1 à 5,
**caractérisée en ce qu'**elle contient 0,1 à 15 % en poids d'au moins un agent propulseur pouvant être activé thermiquement.

7. Composition selon l'une des revendications 1 à 6,
**caractérisée en ce qu'**elle contient 1 à 35 % en poids d'au moins une particule expansée d'au moins une roche volcanique riche en verre comportant une coquille externe fermée, préférablement d'au moins une perlite expansée comportant une coquille externe fermée.

8. Composition selon l'une des revendications 1 à 7, **caractérisée en ce que** les particules expansées d'au moins une roche volcanique riche en verre comportant une coquille externe fermée possèdent une grosseur de grain maximale, pouvant être déterminée au moyen d'une analyse par tamisage, un tamis comportant la taille de mailles correspondante laissant passer toutes les particules, inférieure à 1 000 µm, en particulier inférieure à 750 µm, de préférence inférieure à 500 µm, de manière particulièrement préférée inférieure à 400 µm et/ou présentent une grosseur de grain moyenne en poids d50, pouvant être déterminée au moyen d'une analyse par tamisage, inférieure à 500 µm, en particulier de 10 à 500 µm, en particulier de 20 à 200 µm, préférablement de 30 à 125 µm.

9. Composition selon l'une des revendications 1 à 8, **caractérisée en ce que** les particules expansées en tant que charge légère présentent une densité apparente inférieure à 500 kg/m³, en particulier de 10 à 500 kg/m³, préférablement de 100 à 400 kg/m³, de préférence de 200 à 270 kg/m³.

10. Procédé permettant le raidissement et/ou le renforcement de structures tubulaires, une composition conformément à l'une des revendications 1 à 9 étant appliquée à une température inférieure à 70 °C sur la surface de la structure à renforcer, en particulier à une pression de pompage supérieure à 3 bar, et ladite composition étant durcie à un moment ultérieur à des températures supérieures à 130 °C.

11. Procédé permettant le raidissement et/ou le renforcement selon la revendication 10, **caractérisé en ce que** la composition est appliquée dans une plage de températures de 40 °C à 60 °C.

12. Procédé permettant le raidissement et/ou le renforcement selon la revendication 10 ou 11, **caractérisé en ce que** l'application de la composition est effectuée à une pression d'application de 6 bar à 180 bar.

13. Composant raidi et/ou renforcé à l'aide d'une composition conformément à l'une des revendications 1 à 9 ou fabriqué conformément à un procédé des revendications 10 à 12.

14. Utilisation d'une composition conformément à l'une des revendications 1 à 9 pour le raidissement et/ou le renforcement de structures tubulaires.
